# EUROPÄISCHE PATENTANMELDUNG

(11) **EP 2 682 378 A2**
(43) Veröffentlichungstag der Anmeldung: **08.01.2014**
(21) Anmeldenummer: 13174998.8
(22) Anmeldetag: 03.07.2013
(51) Int. Cl.: C05F 3/00, C05F 3/06, C05F 17/00

(54) **Verfahren und Vorrichtung zur Behandlung stickstoffhaltiger Biomasse**

(30) Priorität: 05.07.2012 DE 102012211781; 26.06.2013 DE 102013212357
(71) Anmelder: Tentscher, Wolfgang, 12167 Berlin (DE)
(72) Erfinder: Tentscher, Wolfgang, 12167 Berlin (DE)
(74) Vertreter: Schwabe - Sandmair - Marx

(57) **Zusammenfassung**

Verfahren zur Behandlung stickstoffhaltiger Biomasse (3; 15), insbesondere Hühnerexkrement enthaltender Biomasse, bei dem
(a) die Biomasse (3; 15) bei einem Trockenmassegehalt von weniger als 70 %, vorzugsweise weniger als 50 %, einer Ammoniakfermentation unterzogen und
(b) Ammoniak während der Ammoniakfermentation mittels eines Strippgases und/oder durch Ausfällen, bevorzugt als Magnesiumammoniumphosphat, aus der Biomasse (3; 15) entfernt wird.

## Beschreibung

Die Erfindung betrifft ein Verfahren sowie eine Vorrichtung zur Behandlung stickstoffhaltiger Biomasse, insbesondere Hühnerexkrement enthaltender Biomasse.

In der gegenwärtigen weltweiten Praxis werden Ammoniakemissionen, zum Beispiel aus Harnsäure enthaltende Hühnerkot, so schnell wie möglich durch Trocknung des Kotes unterdrückt. Die Trocknung beginnt bereits direkt nach der Ablage des Hühnerkots auf ein Förderband in der Käfighaltung. Der frische Hühnerkot wird schließlich vollständig getrocknet, um eine Ammoniakemission auf fast null zu reduzieren. Ammoniak ist eine giftige Substanz, die Pflanzenwachstum rund um die Legehennen- oder Masthähnchenställe herum schädigen kann.

Masthähnchen und Legehennen geben zwischen 70 und 200 g Kot pro Tag und Tier ab. Der Stickstoffgehalt in Hühnerkot von 3 bis 6 % in der Trockensubstanz ist einer der höchsten aller Kotarten. Hühnerkot emittiert einen starken Ammoniakgeruch. Wenigstens 50 % des gesamten Stickstoffgehalts, in vielen Hühnerkotproben bis zu 80 %, liegen als Harnsäure vor, welche den Hühnerkot zu einer reichhaltigen Ammoniakquelle macht.

Bisher bekannte Maßnahmen zielen oftmals auf die Eliminierung der Emissionen von Ammoniak ab. Die Anstrengungen dazu sind erheblich und können letztendlich nur zum Erfolg führen, wenn der Hühnerkot vollständig getrocknet wird.

Die DE 20 2004 003 883 U1 beschreibt eine Belüftungsvorrichtung für Kotbänder in Geflügelanlagen. Mit der Belüftungsvorrichtung kann eine Abtrocknung von bewegbaren Kotbändern über die gesamte flächige Ausdehnung des Kotbandes erfolgen.

Die DE 38 39 599 C1 offenbart eine Vorrichtung zum Trocknen von Hühnerkot. Die Vorrichtung weist ein Kotförderungsband und einen umlaufend angetriebenen Walzenkörper als Kotlockerungsvorrichtung auf, mit welchem der Abtrocknungsvorgang verbessert werden kann.

Ferner sind Verfahren zur Strippung von Ammoniak aus flüssiger Gülle bekannt. So beschreibt die DE 41 03 308 A1 ein Verfahren zur Gülle-Entsorgung. Das Verfahren umfasst die enzymatische Hydrolyse des Harnstoffs zu Ammoniumcarbonat mit Urease-Präparationen, die Flockung von suspendierten und kolloidal gelösten Inhaltsstoffe mit organisch-chemischen Polyelektrolyten, die Flotation der Flocken durch thermische Zersetzung des gelösten Ammoniumcarbonates, das Austreiben des Ammoniaks und seine Absorption in Mineralsäure sowie das Einspeisen der nunmehr stickstoffarmen Restflüssigkeit in die Denitrifizierungsstufe einer Kläranlage.

In der DE 10 2010 033 251 A1 ist ein Verfahren zur Herstellung von Ammoniumcarbonat, Feststoffdünger und Brauch-/Trinkwasser aus Gülle von Nutztieren oder Gärresten aus Biogasanlagen bekannt. Bei dem Verfahren werden flüssige Gülle aus Tierhaltungen oder flüssigen Bestandteilen von Gärresten aus Biogasfermentern mit dem Enzym Urease zusammengeführt.

Die DE 10 2011 108 462 A1 offenbart ein Verfahren zur Herstellung von Biogas aus überwiegend tierischen Exkrementen. In der DE 10 2011 108 462 A1 ist die Möglichkeit beschrieben, dem Gärsubstrat im Fermenter (Bioagasreaktor) Enzyme, wie Urease, in sehr geringen Mengen zuzugeben, um biologisch die Zersetzung von Harnstoff oder Harnsäuren zu Ammoniak und Kohlendioxid zu erreichen. Eine Entfernung von Ammoniak wird an einem ausgekreisten Gärsubstrat bei 180°C bzw. bei Temperaturen von 90 bis 180° und einem Druck von mindestens über 0,5 bar über dem Druck der entsprechenden Siedetemperatur von Wasser vorgenommen. Eine Ammoniakfermentation findet unter diesen Bedingungen nicht statt. Das Auskreisen und Erhitzen bei 180 °C führt zu einer Zerstörung der Mikroorganismen und Enzyme. Die DE 10 2011 108 462 A1 schweigt sich darüber aus, bis zu welcher Konzentration der NH₃-Stickstoff im ausgekreisten einer Temperatur von bis zu 180°C ausgesetzten Fermenterinhalt unter Beibehaltung einer NH₃-Restkonzentration im Fermenter erniedrigt wird, damit dieser Volumenstrom im Fermenter oder gemischt mit frischem Substrat zur Verdünnung frischer Exkremente auf einen NH₃-Gehalt von kleiner 2,5 g/l beitragen kann.

Die DE 39 01 404 A1 beschreibt ein Verfahren zur mikrobiellen Fermentation ammonium- bzw. ammoniakhaltiger wässriger Dispersionen und Lösungen. Eine Entfernung von Ammoniak erfolgt, indem nach einem an sich bekannten Substratabbau zu Carbonsäuren bei Temperaturen von 0 bis 65 °C eine Selbstalkalisierung des Reaktionsmediums und dem damit verbundenen Anstieg des pH-Werts auf über 7 dazu ausgenutzt wird, den vorerst im Substrat als Ammoniumsalz oder organisch gebundenen vorliegenden Stickstoff in flüchtigen Ammoniak zu überführen. Eine Ammoniakfermentation ist in der DE 39 01 404 A1 nicht beschrieben.

Es bestehen sowohl nationale als auch europaweite Bestrebungen, die Stickstoffemission bei der Geflügelhaltung zu verringern. Die Fermentation von Ammoniak, d. h. die Herstellung von Ammoniak durch Mikroorganismen oder Enzyme, kann einen signifikanten Beitrag zur Emissionsminderung bei der Tierhaltung, insbesondere der Geflügelhaltung, leisten.

Vorteilhaft wäre eine Kombination der Ammoniakfermentation mit der Biogasfermentation bei der Verwertung stickstoffhaltiger Biomasse, insbesondere Hühnerexkrement enthaltender Biomasse. Die Ammoniakfermentation und die Biogasfermentation unterscheiden sich insbesondere durch die Fähigkeiten der jeweiligen Mikroorganismen. Die Mikroorganismen in der Ammoniakfermentation, welche zu einem großen Prozentsatz zu den Firmicutes gehören, können auf den Abbauprodukten des Stickstoffwechsels als alleinige Stickstoff- und Energiequelle leben, haben also einen hohen Stickstoffumsatz. Zu den Firmicutes zählen aerobe Bakterien und anaerobe bis aerotolerante Clostridien sowie auch Mollicutes.

Die Mikroorganismen in der Methanfermentation, die zu den Archaeen gehören, haben Essigsäure als hauptsächliche Quelle der Methanbildung und somit einen hohen Säureumsatz. Die Methanbildner werden in den Klassen Methanobacteria, Methanococci und Methanomicrobia zusammengefasst.

In der Ammoniakfermentation und der Biogasfermentation stehen die Mikroorganismen am Ende der jeweiligen Abbauproduktkette und liefern einerseits reduzierten Stickstoff (NH₃) und andererseits reduzierten Kohlenstoff (CH₄). Aus energetischen Gründen ist die Reduktion von Stickstoff zu NH₃ besser und erfolgt, bevor Kohlenstoff zu CH₄ reduziert wird. Stickstoff ist der bessere Protonenakzeptor als Kohlenstoff. Deshalb können die Ammoniakproduzenten in der Ausfaulung besser existieren als die methanogenen Mikroorganismen in der Ammoniakfermentation.

Die Mikroorganismen der Ammoniakfermentation und die Mikroorganismen der Biogasfermentation haben unterschiedliche Ansprüche an die jeweilige chemische Umgebung. So wird in der Ammoniakfermentation ein pH-Wert von 8 bis 9 bevorzugt, also beim pH-Wert-Optimum der an der Ammoniakfermentation beteiligten Enzyme, während bei der Biogasfermentation ein pH-Wert von 7 bevorzugt wird. Die methanogenen Mikroorganismen können bei einem hohen pH-Wert nicht richtig arbeiten, während die Mikroorganismen in der Ammoniakfermentation bei einem niedrigen pH-Wert nicht richtig arbeiten können. Die methanogenen Mikroorganismen in der Biogasfermentation werden durch eine geringe Konzentration an Ammoniak, bereits ab 2 g Ammoniak pro Liter, inhibiert, auch wenn eine gewisse Gewöhnung der methanogenen Mikroorganismen (bis etwa 5 g Ammoniak pro Liter) eintreten kann.

Inhibierend wirken entweder Ammoniak (NH₃) oder das undissoziierte Salz Ammoniumhydrogencarbonat (NH₄HCO₃). Es stellt sich ein pH- und temperaturabhängiges Gleichgewicht nach der Formel ein:

↑ NH₃ ↔NH₄⁺ + HCO₃⁻ ↔ NH₄HCO₃.

Bei einem hohen pH-Wert verschiebt sich das Gleichgewicht zu flüchtigem NH₃, bei einem niedrigen pH-Wert zu dem undissoziierten Salz Ammoniumhydrogencarbonat (NH₄HCO₃).

Unter aeroben Bedingungen haben Bakterien eine Verdopplungszeit (Generationszeit) von etwa 0,5 bis 2 Stunden. Dies geht in der Regel einher mit einem hohem Stoffumsatz, d.h. hohen spezifischen Enzymaktivitäten. Unter anaeroben Bedingungen haben Bakterien, insbesondere die Methanbildner, eine Verdopplungszeit (Generationszeit) von 2 bis 3 Wochen. Dies geht in der Regel einher mit niedrigem Stoffumsatz, niedrigen Mikroorganismenkonzentrationen, niedriger Enzymkonzentration und schließlich niedrigen Enzymaktivitäten. Die Aufenthaltszeiten bei der aeroben Ammoniakfermentation liegen bei wenigen Stunden bis zu etwa 2 Tagen, was mit einer hoher Enzymkonzentration und hohen Enzymaktivitäten einher geht. Der Reaktionsraum kann so bemessen werden, dass das Substrat lediglich einige Stunden bis zu etwa 2 Tage im Reaktionsraum verbleibt.

Auf anaerobe Bedingungen angewiesene Bakterien der Biogasfermentation können sich unter aeroben Bedingungen der Ammoniakfermentation nicht bzw. nur schlecht vermehren. Dafür gibt es folgende Gründe:
1) Aufgrund der unter aeroben Bedingungen kurzen Verdopplungszeit von ca. 1 Stunde bis 2 Tage können Anaerobier mit Verdopplungszeiten von ca. 2 bis 4 Wochen (entspricht Aufenthaltzeiten von 2 bis 4 Wochen bzw. 14 bis 30 Tage) nicht aktiv werden, weil sie ausgespült werden. Methanbildner z.B. werden zudem durch Sauerstoff völlig inhibiert.
2) Ein weiterer Grund dafür, dass in der aeroben Ammoniakfermentation Methanbildner nicht aktiviert werden, ist die Abwesenheit des monomeren Substrates Essigsäure. Polymere organische Stoffe wie Eiweiße, Stärke, Zellulose oder Hemizellulose werden unter den gewählten Bedingungen nicht hydrolysiert. Somit gibt es keine monomeren Hydrolyseprodukte, aus denen Essigsäure gebildet werden könnte. Biogas wird hauptsächlich aus Essigsäure gebildet.
3) Eine der gewählten Bedingungen ist die Gegenwart der monomeren Stoffe, Harnsäure und Harnstoff. Diese verhindern über Rückkopplungsmechanismen die Bildung von Exoenzymen zur Hydrolyse von polymeren Stoffen. Die Zugabe einer geringen Konzentration eines leicht abbaubaren Stoffes (Kohlenhydrat) kann den durch die N-Limitierung verursachten Stress reduzieren.
4) Die anaerobe Hydrolyse der polymeren Inhaltsstoffe zu monomeren Stoffen wäre der langsamste Schritt in der Biogasfermentation und benötigt einen optimalen pH-Wert Bereich von 6 bis 6,5, während in der Ammoniakfermentation der pH größer als 8 beträgt.

Um einen detaillierteren Einblick in den Ablauf der Ammoniakfermentation zu gewähren, wird nachfolgend der Abbau von Harnsäure und Harnstoff kurz erläutert und verglichen.

Der Harnsäureabbau wird durch Urikase (Harnsäure-Oxydase) katalysiert. Hierbei wird Harnsäure zu Allantoin oxidiert. Anschließend erfolgt der Abbau von Allantoin zu Harnstoff.

Der Harnsäureabbau lässt sich am Beispiel des für Bakterien gültigen Reaktionsschemas darstellen:

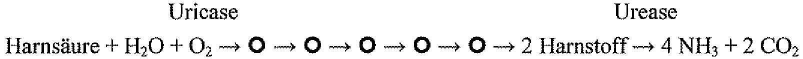

Jeder Kreis im Reaktionsschema symbolisiert den Abbau zu einer anderen Substanz, jeweils katalysiert durch ein bestimmtes Enzym, beispielsweise Allantoicase (allantoin amidohydrolase, EC 3.5.2.5), Allantoat Amidohydrolase (EC 3.5.3), S-(-)Ureidoglycin aminohydrolase (EC 3.5.3.B1), Oxamat Ureidoglycolat Dehydrogenase (EC 1.1.1.154), Oxamat Carbamoyltransferase (EC 2.1.3.5). Ein oder mehrere der Mikroorganismen verfügen über alle notwendigen Enzyme, um aus Harnsäure oder Allantoin schließlich Ammoniak zu fermentieren und freizusetzen.

Die Michaelis-Konstante (Km) mit der Einheit einer Konzentration gibt die Affinität des Enzyms zum Substrat an. Je kleiner der Wert, desto höher die Affinität. Die Km-Konstante beispielsweise von Allantoicase sollte unter 1 (mM/1) liegen. Mikroorganismen, die wesentlich schlechtere Enzyme bilden und bei denen dieser Nachteil nicht durch höhere Konzentrationen ausgeglichen werden kann, werden nach und nach durch andere Mikroorganismen ersetzt, die zeitlich parallel aus anderen Quellen wie z.B. Böden isoliert werden.

Der Abbau der Harnsäure ist sauerstoffabhängig und läuft bevorzugt aerob ab. Wenn dieser Abbauweg anaerob stattfinden soll, müssen die Mikroorganismen unter erheblichem Aufwand eine Sauerstoffquelle finden und nutzen.

Der Harnstoffabbau lässt sich durch folgendes Reaktionsschema darstellen:
Urease
Harnstoff → 2 NH₃ + CO₂

Aus den Reaktionsschemata wird deutlich, dass die Ammoniakfermentation von Harnsäure sieben Prozessschritte umfassen kann, die von Harnstoff dagegen nur einen Prozessschritt umfasst. Zwar ist die Urikase mit seinen kinetischen Werten, wie z.B. den Michaeliskonstanten und der Weclaselzahl, das "Leitenzym", welches die Abbaukette in Gang setzt, aber die Vielzahl der anderen involvierten Enzyme benötigt selbstverständlich auch eine gewisse Zeit zur Reaktionsdurchführung. Somit verläuft der Harnsäureabbau wesentlich langsamer ab als der Harnstoffabbau.

Eine Aufgabe der Erfindung besteht darin, ein verbessertes Verfahren sowie eine verbesserte Vorrichtung zur Behandlung stickstoffhaltiger Biomasse, insbesondere Hühnerexkrement enthaltender Biomasse, bereitzustellen. Eine Aufgabe einer Weiterbildung der Erfindung ist die Angabe eines verbesserten Verfahrens zur Erzeugung von Biogas aus stickstoffhaltiger Biomasse, bei welchem die Biomasse sowohl einer Ammoniakfermentation als auch einer Biogasfermentation unterzogen wird und insbesondere eine Inhibierung der Biogasfermentation durch Ammoniak reduziert bzw. ganz beseitigt wird.

Bei dem erfindungsgemäßen Verfahren zur Behandlung stickstoffhaltiger Biomasse, insbesondere Hühnerexkremente enthaltender Biomasse, wird die Biomasse bei einem Trockenmassegehalt von weniger als 70 %, vorzugsweise weniger als 50 %, einer Ammoniakfermentation unterzogen. Während der Ammoniakfermentation wird Ammoniak mittels eines Strippgases und/oder durch Ausfällen, bevorzugt als Magnesiumammoniumphosphat, aus der Biomasse entfernt. Durch das Entfernen von Ammoniak während der Ammoniakfermentation wird das Gleichgewicht zur Produktion von Ammoniak hin verschoben. Auf diese Weise wird die Biomasse im Stickstoffgehalt abgereichert.

Zusätzlich oder alternativ zur Entfernung von Ammoniak mittels eines Strippgases kann Ammoniak durch eine chemische Ausfällung entfernt werden, vorzugsweise als Magnesiumammoniumphosphat (MAP). Dazu kann die jeweils fehlende chemische Komponente der Biomasse zugegeben werden. Magnesium kann als MgO und/oder als MgCl₂ zugegeben werden. Es ist auch möglich, Mg-Ionen aus einer Opferelektrode zur Verfügung zu stellen. Die gebildeten MAP-Kristalle können sehr fein ausgebildet sein. Die gebildeten MAP-Kristalle können auf Füllkörpern aufwachsen. Die Füllkörper können als rotierende Füllkörper ausgebildet sein. Die Füllkörper können nach erfolgter Strippung oder auch parallel zur Strippung geschaltet werden. Wird MAP-Kristallisationsfläche auf schon gebildeten Kristallen angeboten, kann die Zahl der neu gebildeten sehr feinen Kristalle sinken. Dies kann eine Ernte der Kristalle erleichtern.

In bevorzugten Ausführungsformen beträgt die Konzentration, also die Anzahl, von methanogenen Mikroorganismen der Biogasfermentation, falls vorhanden, während der Ammoniakfermentation und dem Entfernen von Ammoniak aus der Biomasse jeweils höchstens 10⁴, bevorzugt höchstens 10³ pro g Biomasse. Harnstoff oder Harnsäure abbauende Mikroorganismen können in der Biomasse in einer Gesamtkonzentration von wenigstens 10⁶, bevorzugt wenigstens 10⁷ pro g Biomasse enthalten sein. Vorteilhaft ist die Anzahl an Ammoniak produzierenden Mikroorganismen während der Ammoniakfermentation und dem Entfernen von Ammoniak größer als die Anzahl an methanogenen Mikroorganismen der Biogasfermentation. Bevorzugt findet während der Ammoniakfermentation eine Biogasfermentation, wenn überhaupt, nur zu einem geringen Anteil statt. Bevorzugt kann während einer aeroben Ammoniakfermentation keine, während einer anaeroben Ammoniakfermentation, wenn überhaupt, nur zu einem geringen Anteil, eine Biogasfermentation stattfinden. Ein Kontakt zu Prozesswässern von Biogasanlagen kann ausgeschlossen sein. Dies verhindert eine Animpfung mit der unerwünschten anaeroben Mikroorganismenflora des Biogasprozesses.

Der Biomasse können Enzyme, insbesondere Urease und/oder Urikase, zugegeben werden. Bevorzugt kann Urikase zugegeben werden. Bevorzugt kann urikasehaltige Biomasse zugegeben werden. Die Enzyme können insbesondere an einem Harnstoffabbau oder einem Harnsäureabbau beteiligt sein. Die Enzyme können als organisches Material in hoher Reinheit oder als weitgehend gereinigtes Material, also in technischer Reinheit vorliegendes Material verwendet werden. Bevorzugt können die Enzyme aus totem organischen Material, etwa durch Trocknen und Mahlen einer Mischung aus Mikroorganismen, gewonnen werden. Bevorzugt können die Enzyme durch einen Ultraschallaufschluss von Mikroorganismen gewonnen werden. Durch einen Aufschluss kann die Konzentration an extrazellulären Enzymen in der Biomasse erhöht werden. Intrazelluläre Enzymkonzentrationen der Enzyme können zwischen 10 und 80 %, bevorzugt zwischen 5 und 50 %, des Proteingehaltes betragen. Der Enzym-Proteingehalt kann zwischen 5 und 80 % des Trockenmassegehaltes betragen. Von dem intrazellulären Enzymgehalt können durch Verfahrensschritte der Desintegration zwischen 20 % und 80 % zugänglich gemacht werden, die dann extrazellulär, also in der oder auf der der Ammoniakfermentation ausgesetzten Biomasse, tätig sein können.

Die Enzyme können aber auch in lebenden Organismen wirken oder durch diese hergestellt werden. So können bei der Ammoniakfermentation intrazelluläre oder extrazelluläre Enzyme von Mikroorganismen verwendet werden. Bevorzugt können bei der Ammoniakfermentation Mikroorganismen eingesetzt werden, welche hauptsächlich extrazelluläre Enzyme bilden.

Der Biomasse können vor oder während der Ammoniakfermentation Ammoniak produzierende Mikroorganismen zugegeben werden. Bevorzugt können der Biomasse Harnstoff oder Harnsäure abbauende Mikroorganismen zugegeben werden. Die Mikroorganismen können aber auch von Hause aus, d.h. ohne Zugabe von außen, in der Biomasse enthalten sein. Bevorzugt handelt es sich bei den Mikroorganismen um Harnsäure abbauende Mikroorganismen.

Beispielsweise können in der Biomasse einer oder mehrere der folgenden nicht pathogenen Ammoniak produzierenden Organismenteile und/oder Mikroorganismen von Hause aus enthalten sein oder zugegeben werden: Agmenellum quadruplicatum, Agmenellum spp., Alcaligenes eutrophus, Alcaligenes spp., Arthrobacter oxydans, Arthrobacter pascens, Artrhobacter spp., Aspergillus flavus, Aspergillus spp., Bacillus fastidiosus, Bacillus pasteurri, Bazillus spp., Campylobacter pylori, Candida spp., Candida tropicalis, Candida utilis, Clostridium uracilicum, Clostridium spp., Corynebacterium spp., Enterobacter cloacae, Enterobacter spp., Escherichia coli, Escherichia spp., Micrococcus roseus, Micrococcus spp., Micrococcus varians, Neurospora crassa, Neurospora spp., Nocardia spp., Pseudomonas spp., Rhodococcus rodochrous, Rhodococcus spp., Tetrahymena pyriformis, Tetrahymena spp., Arthrobacter allantoicus, Escherichia coli spp., Streptococcus allantoicus, Providencia Rettgeri.

In der Biomasse können Harnstoff abbauende und/oder Harnsäure abbauende Organismenteile und/oder Mikroorganismen von Hause aus enthalten sein oder zugegeben werden. Bevorzugte Beispiele für Harnstoff abbauende Organismenteile und/oder Harnstoff abbauende Mikroorganismen sind: Actinomyces spp., Arthrobacter spp., Aspergillus niger, Bacillus pasteuri, Canavalia ensiformis, Corynebacterium ammoniagenes, Enterobacter spp., Escherichia coli, Glycine max, Helicobacter spp., Klebsiella spp., Lactobacillus animalis, Lactobacillus fermentum, Lactobacillus reuteri, Lactobacillus ruminis, Lactobacillus spp., Lactobacillus vaccinostercus, Methylophilus methylotrophus, Morus alba, Nitellopsis obtusa, Pseudomonas spp., Rhizopus oryzae, Rhodobacter capsulatus, Schizosaccharomyces pombe, Selenomonas ruminantium, Sporosarcina pasteurii, Staphylococcus leei, Staphylococcus spp., Staphylococcus xylosus, Streptococcus salivarius, Streptococcus thermophilus, Zea mays.

Bevorzugte Beispiele für Harnsäure abbauende Organismenteile und/oder Mikroorganismen sind: Arthrobacter globiformis, Arthrobacter pascens, Aspergillus flavus, Bacillus acidi urici, Bacillus fastidiosus, Bacillus spp., Bacillus subtilis, Bacteroides spp., Brevibacterium spp., Campylobacter jejuni, Campylobacter spp., Candida spp., Candida utilis, Carthamus tinctorius Cicer arietinum, Cyberlindnera jadinii, Dictyostelium discoideum, Enterobacter spp., Faecalibacterium prausnitzii, Faecalibacterium spp., Geobacillus spp., Glycine max, Hansenula polymorpha, Helianthus spp., Microbacterium spp., Neurospora crassa, Peptostreptococcus Kluyver, Phaseolus coccineus, Phaseolus vulgaris, Pseudomonas aeruginosa, Puccinia recondita, Rhizopus oryzae, Ricinus communis, Saccharomyces cerevisiae, Streptomyces albidoflavus, Streptomyces aureofaciens, Streptomyces cyanogenus, Streptomyces graminofaciens, Trichoderma spp., Triticum aestivum, Uromyces phaseoli, Uromyces viciae-fabae, Vicia faba, Vigna unguiculata, Yucca brevifolia, Zea mays.

Selbstverständlich können eine oder mehrere der oben aufgeführten Mikroorganismen, d. h. in jeder Kombination, in der Biomasse von Hause aus enthalten sein oder zugegeben werden. Die Anwesenheit von zwei und mehr Arten von Mikroorganismen hat den Vorteil, dass sich das System der Ammoniakfermentation in jeder der möglichen Betriebsarten (diskontinuierlich oder kontinuierlich) stabilisieren und in einen Gleichgewichtszustand übergehen kann.

Der Biomasse kann vor oder während der Ammoniakfermentation zumindest ein Stoff zugeführt werden, welcher die Bildung und/oder die Aktivität von Enzymen erhöht. Bevorzugt kann zumindest ein Stoff zugesetzt werden, welcher eine Urikasebildung und/oder deren Aktivität steigert. Alternativ oder zusätzlich kann zumindest ein Stoff zugegeben werden, welcher für andere Enzyme notwendig ist, um die Verbindungen der Zwischenschritte abzubauen. Gleichermaßen kann die Ureasebildung und/oder deren Aktivität gesteigert werden.

Um eine Ureaseaktivität zu fördern kann zumindest ein Spurenelement, bevorzugt Nickel, zur Biomasse gegeben werden. Nickel kann beispielsweise als Salz in einem Mol-Verhältnis von Urease : Nickel von maximal 1 : 5, wenigstens von 1 : 1, bevorzugt von 1 : 2, zugesetzt werden. Im ersten und/oder allen weiteren Prozessschritten können weitere Spurenelemente zugegeben werden, wie beispielsweise einzelne oder mehrere Salze von Fe³⁺, Na⁺, Ca²⁺, Zn²⁺, Mn²⁺, oder Cu²⁺, um die Ansprüche der jeweiligen Mikroorganismen und/oder Enzyme zu befriedigen und/oder die Enzymaktivitäten zu optimieren. Die Konzentration der zugegebenen Salze kann von 10⁻³ bis 10⁻⁵ Mol/l betragen.

Eine Urikasebildung wird grundsätzlich durch Harnsäure induziert. Die Gegenwart von Harnsäure allein kann für die Bildung des Enzymes ausreichen. Der Biomasse kann jedoch vor oder während der Ammoniakfermentation zumindest ein Kohlenhydrat zugegeben werden, welches zur Aktivitätssteigerung dienen kann. Bevorzugt können leicht abbaubare Kohlenhydrate zur Biomasse gegeben werden, beispielsweise Glukose, Fructose, Saccharose. Auf diese Weise kann insbesondere bei einem N-limitiertem Wachstum eine Urikasebildung mit hoher Enzymaktivität gefördert werden. Die meisten der oben erwähnten Mikroorganismen können auf Harnsäure als alleiniger Kohlenstoff- und Stickstoffquelle leben und dabei Urikase mit guter Aktivität produzieren. Um die Urikasebildung zu fördern, kann eine geringe Menge eines leicht abbaubaren Kohlenhydrates der Biomasse zugeführt werden. Bevorzugt werden nicht mehr als 5 Mol Kohlenhydrat pro Mol Urikase zugeführt. Besonders bevorzugt werden 0,1 bis 2 Mol Kohlenhydrat pro Mol Urikase zugeführt. Anstelle reiner Kohlenhydrate können kohlenhydrathaltige Abfälle oder Abwässer, beispielsweise aus der Obstverarbeitung, zugesetzt werden, um Kosten zu sparen.

Die Ammoniakfermentation kann wenigstens 10 min, bevorzugter wenigstens 1 h dauern. Ferner kann die Ammoniakfermentation höchstens 36 h, vorzugsweise 24 h dauern. In einer bevorzugten Ausführungsform kann eine Ammoniakfermentation unterzogene Biomasse, in der die Konzentration von Ammoniak produzierenden Mikroorganismen wenigstens 10⁷, bevorzugt 10⁸ pro g Biomasse beträgt, der Biomasse vor oder während der Ammoniakfermentation beigemischt werden. Auf diese Weise kann die Abreicherung von Stickstoff in der Biomasse weiter erhöht werden.

Die Ammoniakkonzentration kann während der Ammoniakfermentation höchstens 70%, vorzugsweise höchstens 60%, der Gleichgewichtskonzentration betragen, die dem Dissoziafiionsgleichgewicht des in der Biomasse enthaltenen gesamten ammoniakalischen Stickstoffs (GAS-N; im Englischen TAN, Total Ammoniacal Nitrogen) entspricht. Die Ammoniakkonzentration kann über die überwiegende Zeitdauer der Ammoniakfermentation wenigstens 20%, vorzugsweise wenigstens 30%, der Gleichgewichtskonzentration betragen, die dem Dissoziationsgleichgewicht des in der Biomasse enthaltenen gesamten ammoniakalischen Stickstoffs (GAS-N; im Englischen TAN, Total Ammoniacal Nitrogen) entspricht.

Bevorzugt kann die Ammoniakkonzentration mittels der Strippgasgeschwindigkeit eingestellt werden. Dazu kann die Strippgasgeschwindigkeit zwischen 0,1 und 5 m/s variiert werden. Alternativ oder zusätzlich kann der Strippgasstrom zeitweise ganz abgeschaltet, also unterbrochen werden. Nach erfolgtem Strippen kann der Restgehalt an Ammoniak durch Zugabe von Phosphationen oder Magnesiumionen als Magnesiumammoniumphosphat ausgefällt werden.

In bevorzugten Ausführungsformen wird so viel Ammoniak entfernt, dass in der Biomasse nie mehr als 70 Gew.-%, vorzugsweise nie mehr als 60 Gew.-% des durch die Ammoniakfermentation aus der Biomasse insgesamt erzeugbaren Ammoniaks vorhanden sind. In weiteren bevorzugten Ausführungsformen kann nur so viel Ammoniak entfernt werden, dass in der Biomasse stets wenigstens 20 Gew.-%, vorzugsweise stets wenigstens 30 Gew.-% des durch die Ammoniakfermentation aus der Biomasse insgesamt erzeugbaren Ammoniaks vorhanden sind.

Bevorzugt kann während der Ammoniakfermentation Ammoniak aus der Biomasse entfernt werden, bevor 10 bis 40 Gew.-%, bevorzugt 30 Gew,-% des in der Biomasse zu Beginn der Ammoniakfermentation enthaltenen Stickstoffs umgewandelt worden sind.

Die Gesamtdauer der Ammoniakenifernung kann wenigstens 10%, vorzugsweise wenigstens 20%, der Dauer der Ammoniakfermentation ausmachen. Nach Einsetzen der Amnmoniakentfernung kann kontinuierlich oder mit einem oder mehreren Unterbrechungen Ammoniak aus der Biomasse entfernt werden, wobei die jeweilige Unterbrechung höchstens 2 h, vorzugsweise 1 h dauert. Besonders bevorzugt wird Ammoniak kontinuierlich während der gesamten Dauer der Ammoniakfermentation entfernt, wodurch die Abreicherung der Biomasse im Stickstoffgehalt erhöht wird.

Die Ammoniakfermentation kann aerob oder anaerob durchgeführt werden. In bevorzugten Ausführungsformen kann die Ammoniakfermentation aerob oder semi-aerob durchgeführt werden. In einer besonders bevorzugten Ausgestaltung kann die Ammoniakfermentation ab Allantoin sowohl unter aeroben als auch unter anaeroben Bedingungen ablaufen.

Die Biomasse kann während der Ammoniakfermentation befeuchtet und/oder das Strippgas mit einem Feuchtanteil von wenigstens 60%, vorzugsweise wenigstens 70%, zugeführt werden.

Die Ammoniakfermentation kann bei einem pH-Wert von wenigstens 7, vorzugsweise wenigstens 8, durchgeführt werden. Die Ammoniakfermentation kann bei einem pH-Wert von wenigstens 9, vorzugsweise höchstens 8,5, durchgeführt werden. Eine Zugabe von Chemikalien wie Calciumsulfat oder Alkalien ist somit nicht erforderlich.

Ammoniak, welcher während der Ammoniakfermentation entfernt wird, kann als Ausgangsmaterial für eine Vielzahl verschiedenster Produkte verwendet werden, etwa Düngemittel, Sprengstoffe, Kunstharze, Reinigungs- und Haarfärbemittel sowie Arzneimittel. Bevorzugt kann der entfernte Ammoniak zur Herstellung eines stickstoffhaltigen Düngemittels oder eines wenigstens 40 Gew.-% Ammoniak enthaltenden Fluids verwendet werden. Der entfernte Ammoniak kann in einem Gas oder einer Flüssigkeit gelöst oder in Form eines ammoniakhaltigen Salzes weiter prozessiert werden. Vorteilhaft kann durch die Herstellung verschiedener Düngemittel die Flexibilität und die Wirtschaftlichkeit eines Betriebs gesteigert werden. Durch eine Weiterverarbeitung des entfernten Ammoniaks kann die Produktivität eines Betriebs im Vergleich zu einer Verwendung von konventionellen Abluftreinigungsanlagen gesteigert werden.

In einer bevorzugten Ausführungsform kann Ammoniak im Strippgas abgereichert werden und das im Ammoniak abgereicherte Strippgas erneut in die Ammoniakfermentation zurückgeführt werden. Das im Ammoniak abgereicherte Strippgas kann zumindest einen Teil des Strippgases im Verfahrensschritt (b) bilden. Durch die Rückführung des im Ammoniak abgereicherten Strippgases kann die Ammoniakkonzentration des Strippgases im Verfahrensschritt (b) 1 bis 50 % der Sättigungskonzentration des feuchten Strippgases sein.

Die Ammoniakfermentation kann als submerse oder emerse Fermentation ausgebildet sein. Die submerse Ammoniakfermentation kann mittels suspendierter Mikroorganismen und/oder Enzymen durchgeführt werden. Die emerse Ammoniakfermentation kann mittels auf einem Träger fixierter und/oder immobilisierter Mikroorganismen und/oder Enzyme durchgeführt werden. Bevorzugt kann die Ammoniakfermentation als eine Kombination aus submerser und emerser Fermentation ausgebildet sein.

Bei einem Trockenmassegehalt flüssiger Biomasse von kleiner 12 % kann bei der Ammoniakfermentation mit Kopplung von submerser und emerser Fermentation die submerse enzymhaltige Biomasse 0,1 % bis 30 %, bevorzugt 1 bis 5 %, der Trockenmasse betragen. Bei einem Trockenmassegehalt zwischen 20 und 60 % in der festen Biomasse bei der Trockenfermentation kann die submerse enzymhaltige Biomasse 0,1% bis 30 %, bevorzugt 1 bis 3 %, der Trockenmasse betragen.

Die Verfahrenskombination aus submerser und emerser Fermentation ist besonders vorteilhaft für den Abbau von Harnsäure enthaltenden Flüssigkeiten und Schlämmen. Durch eine Kombination aus submerser und emerser Fermentation kann der im Vergleich zum Harnstoffabbau langsamere Harnsäureabbau durch eine höhere Konzentration an Enzymen kompensiert teilweise oder komplett kompensiert oder ausgeglichen werden. Alleine die Beachtung der Anreicherung von submers und im Biofilm trägerfixiert arbeitenden Mikroorganismen, die extrazelluläre Enzyme bilden, kann die Umsatzraten deutlich steigern. Es kostet diejenigen Mikroorganismen, die nur intrazelluläre Enzyme bilden, Zeit und Energie, den jeweiligen Stoff in die Zelle zu transportieren, mit dem intrazellulären Enzym umzuwandeln und danach wieder aus der Zelle auszuschleusen. Zur Erhöhung der extrazellulär tätigen Enzymmenge kann auch ein kontinuierlicher Aufschluss der submers wachsenden Mikroorganismen beitragen, während dem intrazelluläre Enzyme freigesetzt und extrazellulär tätig werden können. Die extrazelluläre Enzymmenge in der Biomasse kann wenigstens 0,1 g/l und höchstens 5 g/l betragen.

Ein weiterer Erfindungsgegenstand ist eine Vorrichtung mit zumindest einem Behälter, welcher suspendierte und/oder auf einem Träger fixierte und/oder immobilisierte Mikroorganismen und/oder Enzyme zur Ammoniakfermentation enthält. Durch eine Vorrichtung mit einem Behälter, welcher sowohl suspendierte als auch auf einem Träger fixierte und/oder immobilisierte Mikroorganismen und/oder Enzyme zur Ammoniakfermentation enthält, kann zugleich eine submerse und emerse Ammoniakfermentation durchgeführt werden. Selbstverständlich kann der Behälter eine Vielzahl von Trägern umfassen. Bevorzugt kann der Träger als ein Tropfkörper, insbesondere als eine Scheibe ausgebildet sein. Alternativ kann der Träger als ein Festbettfüllkörper ausgebildet sein. Eine oder mehrere solcher Scheiben können auf einer drehbaren Achse befestigt sein und zumindest bereichsweise in die Biomasse eintauchen. Der Abstand der Scheiben zueinander kann von der maximalen Bewuchsschichtdicke eines Biofilmes und/oder der Zugänglichkeit für das Strippgas abhängen. Bevorzugt kann die Biomasse suspendierte Mikroorganismen und/oder Enzyme enthalten. Auf dem Träger zur Fixierung und/oder Immobilisierung von Mikroorganismen und/oder Enzyme kann ein Biofilm aus Mikroorganismen und/oder Enzymen ausgebildet sein.

Vorzugsweise kann der Träger aus Kunststoff ausgebildet sein oder zumindest einen Kunststoff umfassen. Kunststoffe bieten eine erhöhte Korrosionssicherheit und werden leicht von Mikroorganismen besiedelt. Die spezifische Oberfläche des Trägers kann zwischen 100 und 700 m² pro m³ lichtem Volumen sein.

Der als Reaktor dienende Behälter, in welchem die Ammoniakfermentation stattfindet, kann als Trommel ausgebildet sein. Bevorzugt ist die Trommel drehbar ausgebildet. Mittels der Trommel kann Strippgas und Substrat, beispielsweise Hühnerkot, in engen Kontakt kommen. Die Trommel kann im diskontinuierlichen und kontinuierlichen Betrieb eingesetzt werden.

Die Ammoniakfermentation kann in einem oder mehreren Behältern durchgeführt werden. Die Behälter können parallel geschaltet werden. In jedem der Behälter können die Reaktionen gleichermaßen ablaufen. Die Ammoniakfermentation kann somit quasi kontinuierlich ausgestaltet sein. Eine Gaswäsche kann gleichmäßig ausgelastet sein.

Alternativ können in den Behältern unterschiedliche Teile der Ammoniakfermentation ablaufen. In einem ersten Behälter kann der enzymatische Abbau von Harnsäure zu Allantoin erfolgen. Dabei wird noch kein Ammoniak freigesetzt. In weiteren Behältern können je nach Abbaugeschwindigkeit von Schritt zu Schritt wiederum einzelne Schritte der insgesamt 4 bis 6 Schritte bis zum völligen Abbau zu NH₃ und CO₂ nacheinander oder auch gleichzeitig ablaufen. Dabei können insgesamt pro Mol Harnsäure 4 Mol NH₃ gebildet werden. Der Ammoniak aus 4 bis 5 Prozessschritten kann zu einem Teil in jedem einzelnen der Behälter freigesetzt werden.

Die einzelnen Reaktionsschritte der Ammoniakfermentation können räumlich und/oder zeitlich getrennt ablaufen. Die räumliche und/oder zeitliche Trennung der Abbauschritte kann es grundsätzlich ermöglichen, optimale Bedingungen für bestimmte Enzyme hinsichtlich der Temperatur und/oder des pH-Werts einzustellen. Ebenso kann für jeden Reaktionsschritt die Strippgaszuführung separat eingestellt werden. Beispielsweise kann die Umwandlung von Harnsäure in Allantoin durch das Enzym Urikase in einem ersten Behälter unter Zuführung eines Gases erfolgen, welches lediglich zur Belüftung dient. Insbesondere in einem kontinuierlichen Verfahren können die erwähnten Prozessschritte zeitlich und/oder räumlich nacheinander ablaufen. Während des letzten Prozessschrittes, der Vergärung von Harnsäure zu NH₃ und CO₂, können auch andere Abwässer, die nur Harnsäure enthalten, zugesetzt werden. Der Biomasse können vor oder während der Ammoniakfermentation Stoffe zugeführt werden, welche die Bildung und/oder die Aktivität von Enzymen steigert. In verschiedenen Behältern können unterschiedliche Stoffe zugeführt werden. Beispiele für Stoffe, welche die Bildung bzw. die Aktivität von Enzymen steigert sind oben aufgeführt.

Ein weiterer Erfindungsgegenstand ist eine Vorrichtung zur Behandlung stickstoffhaltiger Biomasse, bei welcher eine Ammoniakfermentation unterhalb eines Raumes zur Haltung von Tieren und/oder neben einem Raum zur Haltung von Tieren durchführbar ist. Bei dem Raum zur Haltung von Tieren kann es sich insbesondere um einen Stall handeln. Bevorzugt kann unter dem Raum zur Haltung von Tieren platzsparend ein Behälter angeordnet sein, welcher suspendierte und/oder auf einem Träger fixierte und/oder immobilisierte Mikroorganismen und/oder Enzyme zur Ammoniakfermentation enthält.

Nach einer bevorzugten Ausführungsform kann der Behälter sowohl suspendierte als auch auf einem Träger fixierte und/oder immobilisierte Mikroorganismen und/oder Enzyme zur Ammoniakfermentation enthalten. Auf diese Weise kann eine Ammoniakfermentation durchgeführt werden, welche als eine Kombination einer submersen und emersen Fermentation ausgebildet ist.

Sowohl der Behälter als auch der Träger kann als ein Behälter bzw. Träger des vorhergehend beschriebenen Erfindungsgegenstands ausgebildet sein. In einer bevorzugten Ausführungsform umfasst die Vorrichtung einen gasdurchlässigen Boden, welcher den Raum zur Haltung von Tieren begrenzt. Durch einen solchen Boden kann Strippgas zum Behälter mit den suspendierten und/oder auf einem Träger fixierten und/oder immobilisierten Mikroorganismen und/oder Enzymen geleitet werden. Als Strippgas kann bevorzugt Stallluft verwendet werden. Dadurch können Ammoniakemissionen aus dem Stall aufgefangen werden und die Ammoniakausbeute insgesamt erhöht werden. Alternativ oder zusätzlich kann Stallluft auch als Strippgas für einen Behälter verwendet werden, der neben einem Raum zur Haltung von Tieren angeordnet ist.

Die der Ammoniakfermentation unterzogene Biomasse kann vorzugsweise Hühnerexkrement enthalten und besonders bevorzugt ausschließlich aus Hühnerexkrement bestehen. Selbstverständlich kann die Biomasse neben Hühnerexkrementen auch andere biogene Materialien, wie zum Beispiel Klärschlamm, Bioabfall, Gülle oder Mist, insbesondere aus der Rinder- und Schweinehaltung, enthalten. Ferner kann die Biomasse Schlachthofabfälle oder Abfälle, welche bei der Verarbeitung von Häuten oder Schalentieren anfallen, umfassen. Auch häuslicher Abfall oder industrielle Schlämme können in der Biomasse enthalten sein.

Durch das Entfernen von Ammoniak während der Ammoniakfermentation wird das Gleichgewicht zur Produktion von Ammoniak hin verschoben. Auf diese Weise kann die Abreicherung der Biomasse im Stickstoffgehalt erhöht werden. Bevorzugt erfolgt die Entfernung des Ammoniaks mittels eines Strippgases, insbesondere Luft und/oder Biogas und/oder CO₂ oder CO₂-haltigem Gas und/oder Verbrennungsabgas und/oder Stallluft. Ammoniak kann anschließend von dem Strippgas durch einen Wäscher getrennt werden. Vorteilhaft können Abgase aus Blockheizkraftwerken und/oder Abgase, welche bei der Aufbereitung von Biogas auf Erdgasqualität anfallen, zum Strippen des Ammoniaks verwendet werden. Bei der Verwendung von Biogas als Strippgas kann eine Produktion von Biogas während der Ammoniakfermentation durch Verschieben des Gleichgewichts zur Eduktseite hin reduziert bzw. vermieden werden. Selbstverständlich kann eine Kombination der oben genannten Gase als Strippgas für Ammoniak verwendet werden.

Bei einem Trockenmassegehalt der Biomasse größer 15 % kann die Ammoniakfermentation als Trockenfermentation durchgeführt werden. Vorteilhaft müssen bei der Trockenfermentation von Hühnerkot keine Mikroorganismen von außen zugeführt werden. Bevorzugt kann die Trockenfermentation auf einem Förderband durchgeführt werden. Während der Trockenfermentation kann Ammoniak aus der Biomasse entfernt werden, indem ein Strippgas über und/oder durch die Biomasse geleitet wird. Dabei kann die Biomasse umgewälzt, insbesondere kontinuierlich umgewälzt werden, wodurch insbesondere der Stofftransport zwischen Mikroorganismen und Biomasse sowie Strippgas und Biomasse sichergestellt werden kann.

Das Strippgas kann vorzugsweise mit einer Geschwindigkeit von höher als 0.2 m/s über die Biomasse geleitet werden und etwa 50 % bis 80 % des während der Ammoniakfermentation gebildeten Ammoniaks aus der Biomasse entfernen. Die Trockenfermentation kann bei einem geringen Unterdruck durchgeführt werden. Der Unterdruck kann dazu beitragen, dass Ammoniak aus der Biomasse sowohl durch Unterdruckdestillation als auch durch Strippen entfernt wird.

Eine geringfügige Trocknung der Biomasse während der Trockenfermentation kann in Kauf genommen werden. Bevorzugt wird das Strippgas jedoch befeuchtet, um ein Austrocknen der Biomasse während der Trockenfermentation zu verhindern. Zum Befeuchten der Biomasse kann vorteilhaft Urin verwendet werden. Insbesondere weist das Strippgas einen Feuchtanteil von 60 % bis 100 % auf. Alternativ oder zusätzlich zum Befeuchten des Strippgases kann die Biomasse selbst während der Ammoniakfermentation befeuchtet werden. Durch Befeuchten der Biomasse und/oder des Strippgases kann eine Aktivität der Mikroorganismen aufrechterhalten werden. Des Weiteren kann sich Ammoniak in der Feuchtigkeit auflösen und somit effizienter aus dem Gleichgewicht durch Strippung entfernt werden.

Die Ammoniakfermentation kann als Nassfermentation ausgestaltet sein. Der Trockenmassegehalt der Biomasse kann dabei unter 15 % sein, bevorzugt 1 bis 5 % sein. Die Ammoniakfermentation kann mittels in der Biomasse suspendierter Mikroorganismen und/oder Enzyme durchgeführt werden. Die Ammoniakfermentation kann alternativ oder zusätzlich mittels auf einem Träger fixierter und/oder immobilisierter Mikroorganismen und/oder Enzyme durchgeführt werden. Während dieser Ausgestaltung der Ammoniakfermentation kann Ammoniak aus der Biomasse entfernt werden, indem ein Strippgas sowohl durch die flüssige Biomasse geleitet, insbesondere geblubbert wird, als auch durch den mit großer Oberfläche versehenen zur emersen Fermentation verwendeten Träger hindurchgeleitet wird. Dieser Träger kann beim Eintauchen in die flüssige Biomasse zu deren Belüftung und mechanischer Umwälzung beitragen.

Ein Erfindungsgegenstand ist ferner ein Verfahren zur Behandlung stickstoffhaltiger Biomasse, insbesondere Hühnerexkrement enthaltender Biomasse, mit dem Merkmal a) des Anspruchs 1 und dem weiteren Merkmal, dass die Ammoniakfermentation mittels suspendierter und/oder auf einem Träger fixierter und/oder immobilisierter Mikroorganismen und/oder Enzyme durchgeführt wird, d. h. ein Verfahren, bei dem dieses Merkmal das Merkmal b) des Anspruchs 1 ersetzt. Der weitere Erfindungsgegenstand kann allerdings vorteilhafterweise um das Merkmal b) des Anspruchs 1 der vorliegenden Anmeldung ergänzt werden. Der weitere Erfindungsgegenstand lautet somit:
Verfahren zur Behandlung stickstoffhaltiger Biomasse, insbesondere aus Hühnerexkrement enthaltender Biomasse, bei dem
   a) die Biomasse bei einem Trockenmassegehalt von weniger als 70 %, insbesondere einem Trockenmassegehalt von weniger als 50 %, einer Ammoniakfermentation unterzogen wird,
   b) die Ammoniakfermentation mittels suspendierter und/oder auf einem Träger fixierter und/oder immobilisierter Mikroorganismen und/oder Enzyme durchgeführt wird;
   c) wobei optional Ammoniak während der Ammoniakfermentation mittels eines Strippgases und/oder durch Ausfällen, bevorzugt als Magnesiumammoniumphosphat, aus der Biomasse entfernt wird.

Dieser weitere Erfindungsgegenstand wird durch jedes der hier offenbarten weiteren Merkmale, einzeln und in jeder Merkmalskombination, vorteilhaft weitergebildet.

Das suspendierte oder auf einem Träger fixierte und/oder immobilisierte Enzym kann insbesondere Urease oder Urikase sein. Gegebenenfalls können auch weitere Enzyme, wie Coenzyme, suspendiert oder auf einem Träger fixiert und/oder immobilisiert sein. Auf dem Träger können ferner Cofaktoren oder Cofermente fixiert und/oder immobilisiert sein. Die Enzyme können insbesondere an einem Harnstoffabbau oder einem Harnsäureabbau beteiligt sein. Die Enzyme können als organisches Material in hoher Reinheit oder als weitgehend gereinigtes Material, also in technischer Reinheit vorliegendes Material, verwendet werden. Die Enzyme können aus totem organischem Material, etwa durch Trocknen und Mahlen, einer Bakterienmischung gewonnen werden. Insbesondere können die Enzyme durch mechanisches Aufschließen einer Bakterienmischung gewonnen werden. Besonders bevorzugt können die Enzyme durch einen Ultraschallaufschluss gewonnen werden. Bei der Ammoniakfermentation können die Enzyme aber auch in lebenden Organismen wirken, indem Mikroorganismen auf einem Träger fixiert und/oder immobilisiert werden, ohne an Oberflächen fixiert zu sein. Durch den Einsatz von auf einem Träger fixierter und/oder immobilisierter Mikroorganismen und/oder Enzyme kann eine Ammoniakausbeute erzielt werden, welche die Ammoniakausbeute einer bloßen Strippung übersteigt.

Die Ammoniakfermentation mittels auf einem Träger fixierter und/oder immobilisierter Mikroorganismen und/oder Enzyme kann insbesondere in einem gerührten Kessel durchgeführt werden. In bevorzugten Ausführungsformen kann der Träger inertes Material, insbesondere Kunststoff oder Alginat, umfassen und/oder porös ausgebildet sein. Der Träger kann durch einen stationären Träger, insbesondere ein Festbett, gebildet werden. Ferner kann der Träger durch die Biomasse selbst gebildet sein. Dies gilt insbesondere für eine Ammoniakfermentation als Trockenfermentation. Alternativ oder zusätzlich kann ein Träger, welcher in der Biomasse suspendiert wird und im Anschluss an die Ammoniakfermentation von der Biomasse, insbesondere mittels Schwerkrafttrennung, abgetrennt wird, verwendet werden.

Die Fixierung und/oder Immobilisierung der Mikroorganismen und/oder Enzyme kann an inneren und/oder äußeren Oberflächen des Trägers erfolgen. Vor der Nassfermentation kann die Biomasse insbesondere mittels eines Pressschneckenseparators von suspendierten Stoffen befreit werden. Die Ammoniakfermentation kann dann an einer Biomasse durchgeführt werden, welche im Wesentlichen aus Urin besteht. In diesem Fall ist eine Ammoniakfermentation mittels trägerfixierter und/oder immobilisierter Mikroorganismen besonders vorteilhaft, wenn der Träger in der Biomasse suspendiert wird.

Die auf einem Träger fixierten und/oder immobilisierten Mikroorganismen und/oder Enzyme können nach der Ammoniakfennentation insbesondere mittels Schwerkrafttrennung, etwa in einem Absetzer, abgetrennt werden und erneut einer stickstoffhaltigen Biomasse zugeführt werden. Die Ammoniakfermentation mittels auf einem Träger fixierter und/oder immobilisierter Mikroorganismen und/oder Enzyme ist besonders für die Ammoniakfermentation von Urin geeignet. Besonders bevorzugt wird dabei das Enzym Urease verwendet.

Wie oben beschrieben, kann die Ammoniakfermentation als Trockenfermentation oder Nassfermentation ausgebildet sein. Die Ammoniakfermentation kann unter mesophilen oder thermophilen Bedingungen durchgeführt werden. Insbesondere kann die Ammoniakfermentation bei einer Temperatur von 30 °C bis 75 °C, bevorzugt von 35 °C bis 60 °C, durchgeführt werden.

In einer bevorzugten Ausführungsform kann die durch die Ammoniakfermentation im Stickstoffgehalt abgereicherte Biomasse in einem sich anschließenden Schritt einer Biogasfermentation unterzogen werden. Die stickstoffhaltige Biomasse kann also in einem ersten Schritt durch eine separate in sich geschlossene Ammoniakfermentation im Stickstoffgehalt abgereichert und in einem zweiten Schritt einer Biogasfermentation unterzogen werden. Auf diese Weise kann eine Erzeugung von Biogas aus Biomasse mit hohem Stickstoffgehalt ermöglicht werden. Insbesondere kann eine Erzeugung von Biogas aus Biomasse ermöglicht werden, welche ausschließlich aus Hühnerexkrementen besteht.

Die Ammoniakfermentation kann als erster Prozessschritt erfolgen. Die Ammoniakfermentation kann ein eigenständiges Verfahren bilden und kann an erster Stelle aller Prozessschritte stehen. Auf diese Weise kann die Ammoniakfermentation eine optimale Vorbehandlung der Biomasse für jegliche darauf folgende Prozessschritte darstellen, sei es in Verbindung mit einer dadurch technologisch und wirtschaftlich optimierten Biogasverfahren, sei es das weitere Biomassemanagement (BM), welches von stark verringerten bzw. nicht mehr existierenden Ammoniakemissionen profitiert. Zum BM können alle kurz- und mittelfristigen Bewegungen, Lagern und Speichern in entsprechenden Behältern am Ort der Entstehung der flüssigen und/oder festen Biomasse zählen sowie die Transporte zum und auf dem Ort der Verwendung, letzteres beispielsweise die Ausbringung auf dem Acker als Dünger.

Durch eine der Biogasfermentation vorgeschalteten Ammoniakfermentation können die Nachteile eines hohen Ammoniakgehalts während der Biogasfermentation beseitigt werden. Bevorzugt können solche Mikroorganismen verwendet werden, die eine hohe Enzymkonzentration und Enzymaktivität in Bezug auf die Ammoniakfermentation besitzen bzw. sich solche Bedingungen im Prozess der Ammoniakfermentation einstellen. Die aerobe Ammoniakfermentation aus Harnstoff oder Harnsäure kann bis zu 50 mal schneller ablaufen als die anaerobe in einer Biogasanlage.

In bevorzugten Ausführungsformen können die Ammoniakfermentation und die Biogasfermentation in separaten Schritten, bevorzugt in separaten Vorrichtungen, durchgeführt werden. So kann die Ammoniakfermentation direkt auf einem Förderband oder in einem gerührten Kessel durchgeführt werden. Die Biogasfermentation kann davon unabhängig in einem ersten oder zweiten gerührten Kessel durchgeführt werden.

Durch die Ammoniakfermentation kann der Stickstoffgehalt der Biomasse auf wenigstens die Hälfte bis ein Viertel des ursprünglichen Stickstoffgehaltes gesenkt werden. Auf diese Weise kann eine Inhibierung der methanogenen Mikroorganismen in der Biogasfermentation reduziert bzw. vermieden werden. Insbesondere kann eine Hemmschwellenkonzentration von 5 g Ammoniak pro Liter in der Biogasanlage dauerhaft auf nicht mehr inhibierende Werte unterschritten werden.

Mit Hilfe der Ammoniakfermentation können Hühnerexkremente als Monosubstrat in Biogasanlagen eingesetzt werden. Hohe Energie- und Trocknungskosten für die Trocknung von Hühnerexkrementen können reduziert bzw. vermieden werden. Insbesondere kann eine Vergiftung eines Biogasfermenters durch Ammoniak vermieden werden, welche einen Ausfall der Biogasanlage von mehreren Monaten zur Folge haben könnte. Der beim Verfahren anfallende flüssige Gärrest kann direkt zur Verdünnung von Biomasse verwendet werden. Aufgrund der niedrigen Stickstoffkonzentration entfällt dabei eine kostenintensive Behandlung der ausgefaulten Stoffe durch Eindampfen oder mit Ultrafiltration oder Membranprozessen wie reverser Osmose. Ferner kann aufgrund der vorgeschalteten Ammoniakfermentation der Fermenterraum bei der Biogasfermentation um bis zu 50 % reduziert werden. Vorteilhaft kann auch der Lagerraum, welcher für eine Lagerdauer von mindestens 180 Tagen bereitgestellt werden muss, reduziert werden.

Vorzugsweise findet während der Ammoniakfermentation kein anderer Fermentationsprozess statt. Insbesondere weist die Ammoniakfermentation eine Dauer von 10 Minuten bis 48 Stunden, bevorzugt von einer Stunde bis fünf Stunden, auf. Die Dauer der Ammoniakfermentation kann insbesondere so eingestellt sein, dass ein Verlust an organischer zu Biogas abbaubarer Masse so gering wie möglich ist.

Insbesondere wird während der Ammoniakfermentation nicht der gesamte ammoniakalische Stickstoff (GAS-N; im Englischen TAN, Total Ammoniacal Nitrogen) zu Ammoniak konvertiert. In bevorzugten Ausführungsformen werden zwischen 20 und 80 % des gesamten ammoniakalischen Stickstoffs zu Ammoniak konvertiert. Vorteilhaft kann ein Teil des gesamten ammoniakalischen Stickstoffs im Substrat belassen werden, um ein bestimmtes Kohlenstoff/Stickstoff-Verhältnis einzustellen. Insbesondere kann durch die Ammoniakfermentation der Kohlenstoffgehalt im Vergleich zum Stickstoffgehalt erhöht werden. Auf diese Weise kann insbesondere auch kohlenstoffarmer Urin im Stickstoffgehalt abgereichert werden und anschließend für eine Biogasfermentation verwendet werden.

Ein weiterer Erfindungsgegenstand ist ein Verfahren zur Erzeugung von Biogas aus Biomasse, bei dem die Biomasse mittels eines warmen Biogasstromes erwärmt wird, insbesondere vorgewärmt wird. Das Verfahren muss keine Ammoniakfermentation beinhalten, kann aber vorteilhafterweise um eine Ammoniakfermentation ergänzt werden. Dieser weitere Erfindungsgegenstand wird durch jedes der hier offenbarten weiteren Merkmale, einzeln und in jeder Merkmalskombination, vorteilhaft weitergebildet.

Zumindest ein Teil des bei der Biogasfermentation entstehenden Biogases kann zur Erwärmung der Biomasse verwendet werden. Die Erwärmung der Biomasse kann direkt mittels Durchströmen oder Um- bzw. Überströmen der Biomasse mit einem warmen Biogasstrom und/oder indirekt, insbesondere mittels wenigstens einem Wärmetauscher für indirekten Wärmeaustausch, erfolgen. Biogas aus einem Fermenter ist für gewöhnlich feuchtigkeitsgesättigt. Wenn warmes Biogas mit der kälteren Biomasse in Kontakt kommt, zum Beispiel als Strippgas zum Strippen von Ammoniak, wird durch die Kondensation des Wasserdampfes Energie frei. Diese Energie kann zur Erwärmung der kälteren Biomasse genutzt werden.

Ferner kann auf eine Entfeuchtung des Biogases durch Kühlung, etwa mit einem Kompressionskälteaggregat, verzichtet werden. Eine Entfeuchtung von Biogas durch Kühlung ist üblicherweise erforderlich, um eine Kondensatbildung in Rohrleitungen zu verhindern. Ferner kann eine Entfeuchtung durch Kühlung nötig sein, um ein Biogas zur Beschickung von Blockheizkraftwerken bereitzustellen, welches einen reduzierten Feuchteanteil von 50 bis 80 % aufweist. Durch den Wegfall eines Kompressionskälteaggregats kann der Eigenstromverbrauch einer Biogasanlage deutlich reduziert werden. Außerdem kann eine für den Verkauf verfügbare Wärmemenge der Biogasanlage erhöht werden.

In einer bevorzugten Ausführungsform kann ein warmer, feuchtigkeitsgesättigter Biogasstrom durch eine Biomasse in einem Gas-Flüssig-Wärmetauscher geleitet werden. Vorteilhaft ist ein Gas-Flüssig- Wärmetauscher effizienter als ein Gas-Gas-Wärmetauscher. Auf diese Weise kann die Biomasse für eine Weiterprozessierung vorgewärmt werden. Insbesondere kann der abgekühlte Biogasstrom anschließend zu einem zweiten Wärmetauscher geleitet werden.

Der zweite Wärmetauscher kann bevorzugt als indirekter Gas-Flüssig-Wärmetauscher ausgebildet sein. Der zweite Wärmetauscher kann den abgekühlten Biogasstrom erwärmen, welcher anschließend als wiedererwärmter Biogasstrom weiterprozessiert werden kann. Dabei kann der Feuchteanteil des abgekühlten Biogasstroms weiter reduziert werden. Als Wärmequelle zur Erwärmung des abgekühlten Biogasstroms kann warmes ausgefaultes Substrat verwendet werden. Alternativ kann als Wärmequelle zur Erwärmung des abgekühlten Biogasstroms das Rücklaufwasser eines Blockheizkraftwerkes verwendet werden.

Nachfolgend werden weitere Aspekte der Erfindung beschrieben. Der Anmelder behält es sich vor, auf einen oder mehrere Aspekte jeweils eine eigene Anmeldung zu richten. Soweit in den als Aspekte gekennzeichneten Merkmalen Bezugszeichen verwendet werden, handelt es sich um Bezugszeichen von Ausführungsbeispielen, die nachfolgend noch beschrieben werden. Die Aspekte sind auf diese Ausführungsbeispiele nicht beschränkt, obgleich die Ausführungsbeispiele auch für die unter den Aspekten beschriebenen Merkmale bevorzugte Ausgestaltungsmöglichkeiten aufzeigen.

Aspekt 1# Verfahren zur Behandlung stickstoffhaltiger Biomasse (3; 15), insbesondere Hühnerexkrement enthaltender Biomasse, bei dem
(a) die Biomasse (3; 15) bei einem Trockenmassegehalt von weniger als 70 %, vorzugsweise weniger als 50 %, einer Ammoniakfermentation unterzogen und
(b) Ammoniak während der Ammoniakfermentation mittels eines Strippgases und/oder durch Ausfällen, bevorzugt als Magnesiumammoniumphosphat, aus der Biomasse (3; 15) entfernt wird.

Aspekt 2# Verfahren nach dem vorhergehenden Aspekt, bei dem die Konzentration von methanogenen Mikroorganismen der Biogasfermentation, falls vorhanden, während der Ammoniakfermentation und dem Entfernen von Ammoniak aus der Biomasse (3; 15) jeweils höchstens 10⁴ pro g Biomasse beträgt.

Aspekt 3# Verfahren nach wenigstens einem der vorhergehenden Aspekte, bei dem Harnstoff oder Harnsäure abbauende Mikroorganismen in der Biomasse (3; 15) in einer Gesamtkonzentration von wenigstens 10⁶ pro g Biomasse enthalten sind.

Aspekt 4# Verfahren nach wenigstens einem der vorhergehenden Aspekte, bei dem einer oder mehrere der folgenden Organismenteile und/oder Mikroorganismen in der Biomasse von Hause aus enthalten sind oder zugegeben werden:
Arthrobacter globiformis, Arthrobacter pascens, Aspergillus flavus, Bacillus acidi urici,
Bacillus fastidiosus, Bacillus spp., Bacillus subtilis, Bacteroides spp., Brevibacterium spp., Campylobacter jejuni, Campylobacter spp., Candida spp., Candida utilis,
Carthamus tinctorius Cicer arietinum, Cyberlindnera jadinii, Dictyostelium discoideum,
Enterobacter spp., Faecalibacterium prausnitzii, Faecalibacterium spp., Geobacillus spp., Glycine max, Hansenula polymorpha, Helianthus spp., Microbacterium spp.,
Neurospora crassa, Peptostreptococcus Kluyver, Phaseolus coccineus, Phaseolus vulgaris, Pseudomonas aeruginosa, Puccinia recondita, Rhizopus oryzae, Ricinus communis, Saccharomyces cerevisiae, Streptomyces albidoflavus, Streptomyces aureofaciens, Streptomyces cyanogenus, Streptomyces graminofaciens, Trichoderma spp., Triticum aestivum, Uromyces phaseoli, Uromyces viciae-fabae, Vicia faba, Vigna unguiculata, Yucca brevifolia, Zea mays.

Aspekt 5# Verfahren nach wenigstens einem der vorhergehenden Aspekte und wenigstens einem der folgenden Merkmale:
(i) die Ammoniakfermentation dauert wenigstens 10 min, bevorzugter wenigstens 1 h;
(ii) die Ammoniakfermentation dauert höchstens 36 h, vorzugsweise höchstens 24 h.

Aspekt 6# Verfahren nach wenigstens einem der vorhergehenden Aspekte, bei dem eine einer Ammoniakfermentation unterzogene Biomasse, in der die Konzentration von Ammoniak produzierenden Mikroorganismen wenigstens 10⁷ pro g Biomasse beträgt, der Biomasse vor oder während der Ammoniakfermentation beigemischt wird.

Aspekt 7# Verfahren nach wenigstens einem der vorhergehenden Aspekte, bei dem der Biomasse (3; 15) Enzyme, insbesondere Urikase, und/oder enzymbildende Mikroorganismen, insbesondere urikasebildende Mikroorganismen, zugesetzt werden.

Aspekt 8# Verfahren nach wenigstens einem der vorhergehenden Aspekte, bei dem die Ammoniakkonzentration während der Ammoniakfermentation höchstens 70%, vorzugsweise höchstens 60%, der Gleichgewichtskonzentration beträgt, die dem Dissoziationsgleichgewicht des in der Biomasse enthaltenen gesamten ammoniakalischen Stickstoffs (GAS-N) entspricht.

Aspekt 9# Verfahren nach wenigstens einem der vorhergehenden Aspekte, bei dem die Ammoniakkonzentration über die überwiegende Zeitdauer der Ammoniakfermentation wenigstens 20%, vorzugsweise wenigstens 30%, der Gleichgewichtskonzentration beträgt, die dem Dissoziationsgleichgewicht des in der Biomasse enthaltenen gesamten ammoniakalischen Stickstoffs (GAS-N) entspricht.

Aspekt 10# Verfahren nach wenigstens einem der vorhergehenden Aspekte, bei dem soviel Ammoniak entfernt wird, dass in der Biomasse (3; 15) nie mehr als 70 Gew.-%, vorzugsweise nie mehr als 60 Gew.-%, des durch die Ammoniakfermentation aus der Biomasse (3; 15) insgesamt erzeugbaren Ammoniaks vorhanden sind.

Aspekte 11# Verfahren nach wenigstens einem der vorhergehenden Aspekte, bei dem nur soviel Ammoniak entfernt wird, dass in der Biomasse (3; 15) stets wenigstens 20 Gew.-%, vorzugsweise stets wenigstens 30 Gew.-%, des durch die Ammoniakfermentation aus der Biomasse (3; 15) insgesamt erzeugbaren Ammoniaks vorhanden sind.

Aspekt 12# Verfahren nach wenigstens einem der vorhergehenden Aspekte, bei dem die Ammoniakfermentation aerob oder semi-aerob durchgeführt wird.

Aspekt 13# Verfahren nach wenigstens einem der vorhergehenden Aspekte, bei dem Ammoniak während der Ammoniakfermentation aus der Biomasse (3; 15) entfernt wird, bevor 10 bis 40 Gew.-%, bevorzugt 30 Gew.-% des in der Biomasse (3; 5) zu Beginn der Ammoniakfermentation enthaltenen Stickstoffs umgewandelt worden sind.

Aspekt 14# Verfahren nach wenigstens einem der vorhergehenden Aspekte und wenigstens einem der folgenden Merkmale:
(i) die Gesamtdauer der Amnmoniakentfernung macht wenigstens 10%, vorzugsweise wenigstens 20%, der Dauer der Ammoniakfermentation aus;
(ii) nach Einsetzen der Ammoniakentfernung wird kontinuierlich oder mit einer oder mehreren Unterbrechungen Ammoniak aus der Biomasse (3; 15) entfernt, wobei die jeweilige Unterbrechung höchstens 2 h, vorzugsweise höchstens 1 h, dauert.

Aspekt 15# Verfahren nach wenigstens einem der vorhergehenden Aspekte, bei dem die Biomasse (3) während der Ammoniakfermentation befeuchtet und/oder das Strippgas mit einem Feuchteanteil von wenigstens 60 %, vorzugsweise wenigstens 70 %, zugeführt wird.

Aspekt 16# Verfahren nach wenigstens einem der vorhergehenden Aspekte, bei dem der entfernte Ammoniak zur Herstellung eines stickstoffhaltigen Düngemittels oder eines wenigstens 40 Gew-% Ammoniak enthaltenden Fluids verwendet wird.

Aspekt 17# Verfahren nach wenigstens einem der vorhergehenden Aspekte, bei dem Ammoniak im Strippgas abgereichert und das im Ammoniak abgereicherte Strippgas erneut in die Ammoniakfermentation zurückgeführt wird und zumindest einen Teil des Strippgases im Verfahrensschritt (b) bildet.

Aspekt 18# Verfahren nach wenigstens einem der vorhergehenden Aspekte und wenigsten einem der folgenden Merkmale:
(i) die Ammoniakfermentation wird bei einem pH-Wert von wenigstens 7, vorzugsweise wenigstens 8, durchgeführt;
(ii) die Ammoniakfermentation wird bei einem pH-Wert von höchstens 9, vorzugsweise höchstens 8,5, durchgeführt.

Aspekt 19# Verfahren nach wenigstens einem der vorhergehenden Aspekte, bei dem das Strippgas Luft und/oder Biogas und/oder CO₂ oder CO₂-haltiges Gas und/oder Verbrennungsabgas und/oder Stallluft ist.

Aspekt 20# Verfahren nach wenigstens einem der vorhergehenden Aspekte, bei dem die durch die Ammoniakfermentation im Stickstoffgehalt abgereicherte Biomasse (3; 15) in einem sich anschließenden Schritt einer Biogasfermentation unterzogen wird.

Aspekt 21# Verfahren nach wenigstens einem der vorhergehenden Aspekte, bei dem das Strippgas befeuchtet wird, insbesondere einen Feuchteanteil von 60 % bis 100 % aufweist, und/oder die Biomasse (3) während der Ammoniakfermentation befeuchtet wird.

Aspekt 22# Verfahren nach wenigstens einem der vorhergehenden Aspekte, bei dem die Ammoniakfermentation bei einer Temperatur von 30 °C bis 75 °C, insbesondere von 35 °C bis 60 °C, durchgeführt wird.

Aspekt 23# Verfahren nach wenigstens einem der vorhergehenden Aspekte, bei dem die Ammoniakfermentation eine Dauer von 1 min bis 48 h, insbesondere von 1 h bis 5 h, aufweist.

Aspekt 24# Verfahren nach wenigstens einem der vorhergehenden Aspekte, bei dem die Ammoniakfermentation mittels auf einem Träger (22; 29) fixierter und/oder immobilisierter Mikroorganismen und/oder Enzyme durchgeführt wird.

Aspekt 25# Verfahren nach wenigstens einem der vorhergehenden Aspekte, bei dem der Träger (22; 29) inertes Material, insbesondere Kunststoff oder Alginat, umfasst und/oder porös ausgebildet ist.

Aspekt 26# Verfahren nach wenigstens einem der vorhergehenden Aspekte, bei dem der Träger (29) durch einen stationärer Träger, insbesondere ein Festbett, gebildet wird.

Aspekt 27# Verfahren nach wenigstens einem der vorhergehenden Aspekte, bei dem der Träger (22) in der Biomasse (15) suspendiert wird und bevorzugt im Anschluss an die Ammoniakfermentation von der Biomasse (15), insbesondere mittels Schwerkrafttrennung, abgetrennt wird.

Aspekt 28# Verfahren nach wenigstens einem der vorhergehenden Aspekte, bei dem die Ammoniakfermentation bei einem pH-Wert von 7 bis 9, insbesondere einem pH-Wert von 8,0 bis 8,5, durchgeführt wird.

Aspekt 29# Verfahren nach wenigstens einem der vorhergehenden Aspekte, bei dem zumindest ein Teil des bei der Biogasfermentation entstehenden Biogases zur Erwärmung der Biomasse (3; 15) verwendet wird.

Aspckt 30# Verfahren nach wenigstens einem der vorhergehenden Aspekte, bei dem die Erwärmung der Biomasse (3; 15) direkt mittels Durch- oder Umströmen der Biomasse (3; 15) mit einem warmen Biogasstrom (31), vorzugsweise aus der Biogasfermentation des Schritts c), und/oder indirekt mittels wenigstens einem Wärmetauscher (35) für indirekte Wärmeübertragung erfolgt.

Aspekt 31# Verfahren nach wenigstens einem der vorhergehenden Aspekte, bei dem der Trockenmassegehalt bei der als Nassfermentation ausgebildeten Ammoniakfermentation unter 15 %, insbesondere 1 % bis 5 % ist.

Aspekt 32# Vorrichtung zur Behandlung stickstoffhaltiger Biomasse (3; 15), vorzugsweise zur Durchführung eines Verfahrens nach einem der vorhergehenden Aspekte, mit zumindest einem Behälter, welcher suspendierte und/oder auf einem Träger (22; 29) fixierte und/oder immobilisierte Mikroorganismen und/oder Enzyme zur Ammoniakfermentation enthält.

Aspekt 33# Vorrichtung zur Behandlung stickstoffhaltiger Biomasse (3; 15), vorzugsweise zur Durchführung eines Verfahrens nach einem der vorhergehenden Aspekte, bei welcher eine Ammoniakfermentation unterhalb eines Raumes zur Haltung von Tieren und/oder neben einem Raum zur Haltung von Tieren durchführbar ist.

Die Erfindung wird nachfolgend anhand von Figuren näher erläutert. An den Figuren offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Fig. 1: in einer Prinzipdarstellung einen Behälter zur Durchführung der Ammoniakfermentation als Trockenfermentation,
- Fig. 2: in einer Prinzipdarstellung einen gerührten Kessel zur Durchführung der Ammoniakfermentation als Nassfermentation,
- Fig. 3: in einer Prinzipdarstellung einen Behälter mit einer Mischvorrichtung zur Durchführung der Ammoniakfermentation als Nassfermentation,
- Fig. 4: in einer Prinzipdarstellung einen Behälter mit einem Tropfkörper zur Durchführung der Ammoniakfermentation als Nassfermentation,
- Fig. 5: in einem Diagramm den Einfluss des pH-Werts und der Temperatur auf die Ammoniakfermentation,
- Fig. 6: in einer Prinzipdarstellung eine Vorrichtung zur Erwärmung von Biomasse durch warmes Biogas,
- Fig. 7: in einer Prinzipdarstellung einen auf einem Träger gebildeten einschichtigen Biofilm,
- Fig. 8: in einer Prinzipdarstellung einen auf einem Träger gebildeten mehrschichtigen Biofilm, und
- Fig. 9: in einer Prinzipdarstellung eine Vorrichtung bei welcher eine Ammoniakfermentation unterhalb eines Raumes zur Haftung von Tieren durchgeführt wird.

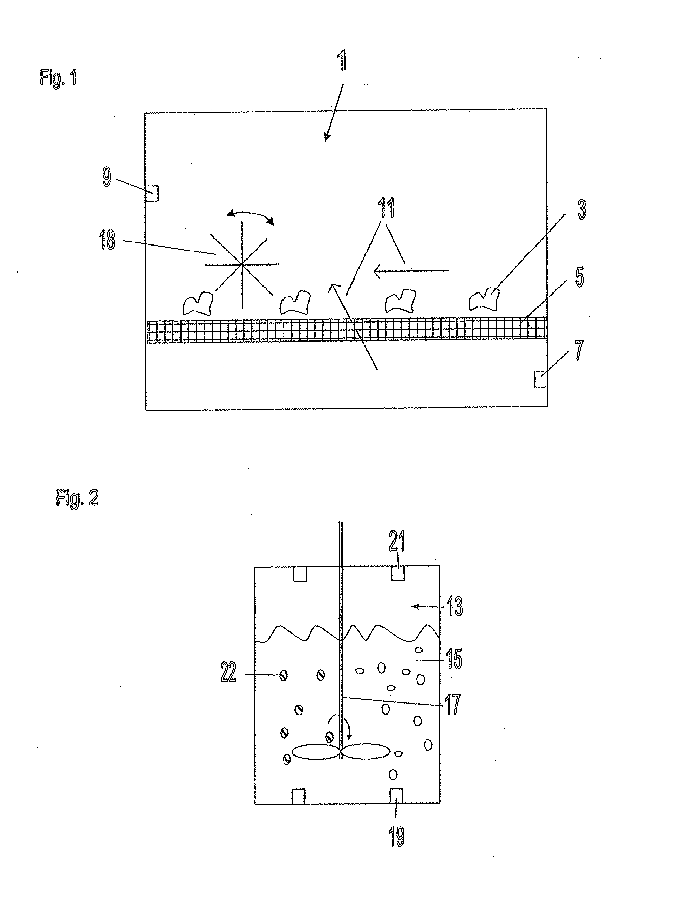

In der Fig. 1 ist schematisch ein Behälter 1 gezeigt, in welchem stickstoffhaltige Biomasse 3 einer Ammoniakfermentation als Trockenfermentation unterzogen wird. In dem Behälter 1 ist ein Förderband 5 angeordnet, auf welchem die Biomasse 3 gefördert wird. Die Biomasse 3 wird hier durch Hühnerexkremente gebildet und umfasst einen Trockenmassegehalt von größer 15 %.

Der Behälter 1 weist einen Strippgaseinlass 7 und einen Strippgasauslass 9 auf. Während der Ammoniakfermentation wird Strippgas durch und über die Biomasse 3 geleitet, um Ammoniak aus der Biomasse zu entfernen, wie in der Fig. 1 mittels der Pfeile 11 veranschaulicht. Die Geschwindigkeit des Strippgases kann dabei insbesondere höher als 0,2 m/s sein.

Ferner ist im Behälter 1 eine Umwälzvorrichtung 18 vorgesehen mit der die Biomasse 3 während der Ammoniakfermentation umgewälzt, insbesondere kontinuierlich umgewälzt wird. Bevorzugt kann während der Ammoniakfermentation im Behälter 1 ein geringer Unterdruck angelegt werden, um Ammoniak aus der Biomasse 3 sowohl durch Strippen als auch durch Unterdruckdestillation zu entfernen.

Nach der Ammoniakfermentation kann die im Stickstoffgehalt abgereicherte Biomasse 3 optional in einem hier nicht gezeigten Behälter überführt werden, in welchem die Biomasse 3 einer Biogasfermentation unterzogen werden kann. Der mittels des Strippgases aus der Biomasse 3 entfernte Ammoniak kann von dem Strippgas durch einen Wäscher getrennt werden. Der so gewonnene Ammoniak kann als Ausgangsstoff für eine Vielzahl verschiedenster Produkte verwendet werden.

Die Fig. 2 zeigt einen gerührten Kessel 13, in welchem die Biomasse 15 einer Ammoniakfermentation als Nassfermentation unterzogen wird. Der gerührte Kessel 13 weist einen Rührer 17 auf, mit dem die Biomasse 15 kontinuierlich gerührt werden kann. Bei der Nassfermentation ist der Trockenmassegehalt der Biomasse 15 unter 15 %, bevorzugt ca. 5 %. Am unteren Ende des gerührten Kessels 13 sind Strippgaseinlässe 19 vorgesehen. Am oberen Ende weist der gerührte Kessel 13 Strippgasauslässe 21 auf. Wie in der Fig. 2 veranschaulichend dargestellt, wird während der Nassfermentation kontinuierlich Strippgas durch die Biomasse 15 geleitet bzw. geblubbert.

In der Biomasse 15 sind auf einem Träger 22 fixierte und/oder immobilisierte Mikroorganismen und/oder Enzyme suspendiert. Der Träger 22 kann ein Füllstoff aus inertem Material, insbesondere Kunststoff oder Alginat, sein.

Nach der Ammoniakfermentation kann der Träger 22 insbesondere mittels Schwerkrafttrennung von der Biomasse 15 abgetrennt werden. Die im Stickstoffgehalt abgereicherte Biomasse 15 kann in einen Behälter überführt werden, in welchem die Biomasse 15 einer Biogasfermentation unterzogen wird.

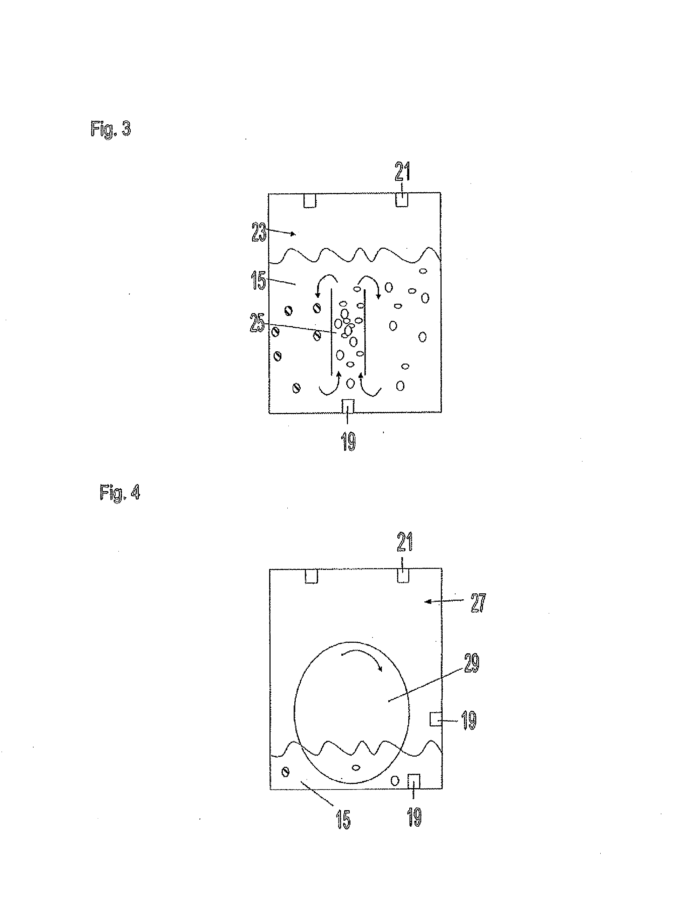

Die Fig. 3 zeigt einen Behälter 23, in welchem die Biomasse 15 einer Ammoniakfermentation als Nassfermentation unterzogen wird, nach einem weiteren Ausführungsbeispiel. Im Behälter 23 ist eine Mischvorrichtung 25 angeordnet. Durch die Mischvorrichtung 25 wird Strippgas geleitet. Auf diese Weise kann die Biomasse 15 mittels des Strippgases umgewälzt und gemischt werden.

Ein weiteres Ausführungsbeispiel für einen Behälter 27, in welchem die Biomasse 15 einer Ammoniakfermentation als Nassfermentation unterzogen wird, ist in der Fig. 4 gezeigt. Der Behälter 27 weist einen als Tropfkörper 29 ausgebildeten Träger auf. Der Tropfkörper 29 kann somit als Träger zur Fixierung und/oder Immobilisierung von Mikroorganismen und/oder Enzymen dienen. Der Tropfkörper 29 kann durch eine oder mehrere Scheiben oder Paddel gebildet sein. Während der Ammoniakfermentation kann der Tropfkörper 29 zumindest bereichsweise in die Biomasse 15 eintauchen. Insbesondere kann sich der Tropfkörper 29 während der Ammoniakfermentation drehen.

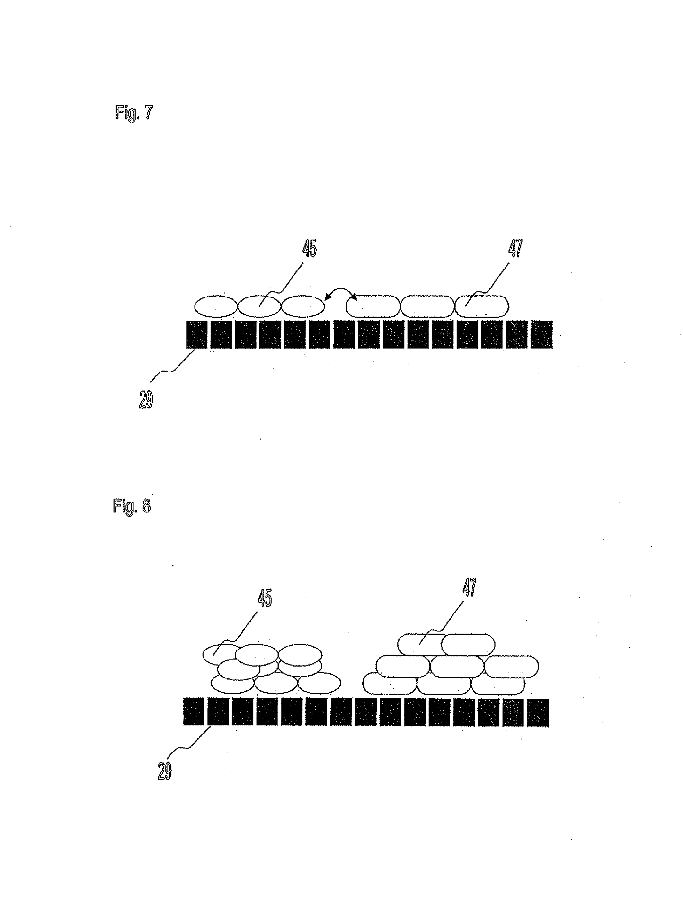

Auf dem Tropfkörper 29 kann ein Biofilm aus der Biomasse 15, welcher Mikroorganismen und/oder Enzyme enthält, gebildet sein. Der Biofilm kann durch Strippgas kontaktiert werden. In der Fig. 7 ist ein einschichtiger Biofilm, bestehend aus verschiedenen Mikroorganismen 45, 47 auf dem Träger 29 gezeigt. Die verschiedenen Mikroorganismen im Biofilm, die Harnsäure und Harnstoff zersetzende Enzyme bilden, insbesondere Uricase (I.U.B.: 1.7.3.3, Urate oxydase) und Urease, haben engen Kontakt zueinander. Im Biofilm werden anders als bei der submersen Ammoniakfermentation sowohl intrazelluläre als auch insbesondere extrazelluläre Enzyme gebildet. Die Bildung dieser Enzyme findet bei Anwesenheit des Substrates Harnsäure oder Harnstoff statt. Harnsäure induziert die Enzymbildung und aktiviert die dafür zuständigen Gene. Wie in der Fig. 7 veranschaulichend durch einen Doppelpfeil dargestellt, tauscht die Gemeinschaft an Mikroorganismen des Biofilmes untereinander Informationen aus. Der Biofilm, kann auch mehrschichtig ausgebildet sein (siehe Fig. 8).

Im Falle, dass in der Biomasse 15 des in der Fig. 4 gezeigten Behälters 27 Mikroorganismen und/oder Enzyme suspendiert sind, kann in der Biomasse 15 eine submerse Ammoniakfermentation durchgeführt werden. Zusätzlich oder alternativ dazu kann an dem Träger 29 ausgebildeten Biofilm eine emerse Ammoniakfermentation durchgeführt werden. Besonders vorteilhaft können die submerse und emerse Ammoniakfermentation kombiniert werden. Bevorzugt kann Strippgas durch die Biomasse 15 geleitet und/oder mit dem auf dem Träger 29 ausgebildeten Biofilm in Kontakt gebracht werden.

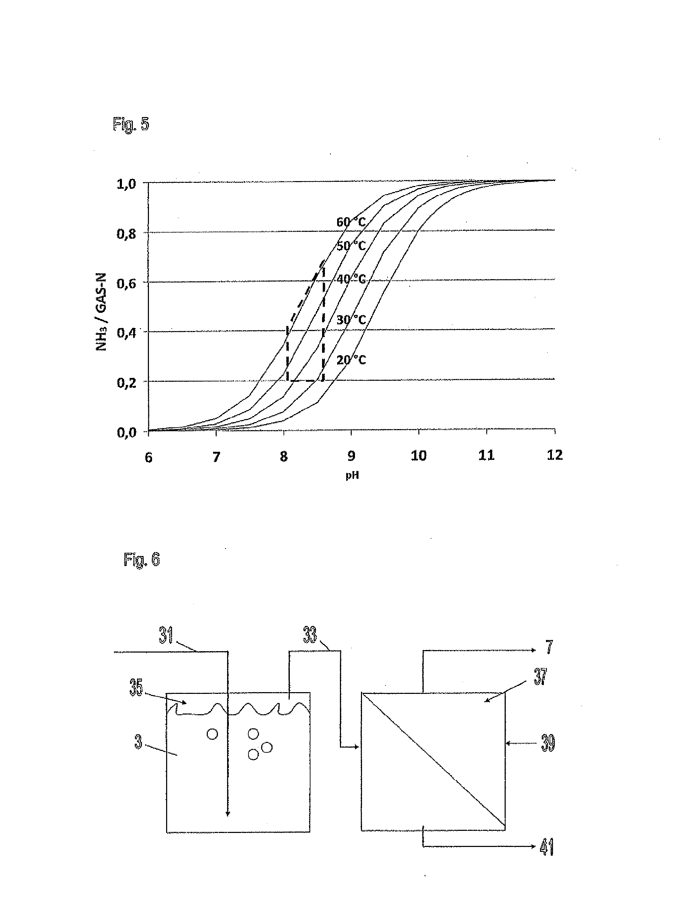

In der Fig. 5 ist der Einfluss des pH-Werts sowie der Temperatur auf die Ammoniakfermentation in einem Diagramm dargestellt. Der pH-Wert ist auf die X-Achse aufgetragen und das Verhältnis von Ammoniak zum gesamten ammoniakalischen Stickstoff (NH₃/GAS-N) ist auf die Y-Achse aufgetragen. In dem Diagramm ist ein Temperaturbereich von 5 °C bis 60 °C dargestellt. Bevorzugt beträgt das Verhältnis NH₃/GAS-N zwischen 0,2 und 0,8. Wie durch die gestrichelte Linie in der Fig. 3 angedeutet, kann die Ammoniakfermentation somit bevorzugt bei einem pH-Wert von 8 bis 9 und einer Temperatur von 35 °C bis 60 °C durchgeführt werden.

Die Fig. 6 zeigt eine Vorrichtung zur Erwärmung von Biomasse durch warmes Biogas. Die Vorrichtung weist einen ersten Wärmetauscher 35 und einen zweiten Wärmetauscher 37 auf. Der erste Wärmetauscher 35 ist insbesondere als direkter Gas-Flüssig-Wärmetauscher ausgebildet. Im ersten Wärmetauscher 35 wird ein warmer, feuchtigkeitsgesättigter Biogasstroms 31 durch die Biomasse 3 geleitet. Die Biomasse 3 wird so für eine Weiterprozessierung vorgewärmt. Der abgekühlte Biogasstrom 33 wird anschließend zum zweiten Wärmetauscher 37 geleitet.

Der zweite Wärmetauscher 37 kann insbesondere als indirekter Gas-Flüssig-Wärmetauscher ausgebildet sein. Der zweite Wärmetauscher 37 kann den abgekühlten Biogasstrom 33 erwärmen, welcher anschließend als wiedererwärmter Biogasstrom 41 weiterprozessiert werden kann. Dabei kann der Feuchteanteil des abgekühlten Biogasstroms 33 reduziert werden.

Als Wärmequelle zur Erwärmung des abgekühlten Biogasstroms 33 kann warmes ausgefaultes Substrat 39 verwendet werden. Alternativ kann als Wärmequelle zur Erwärmung des abgekühlten Biogasstroms 33 das Rücklaufwasser eines Blockheizkraftwerkes verwendet werden.

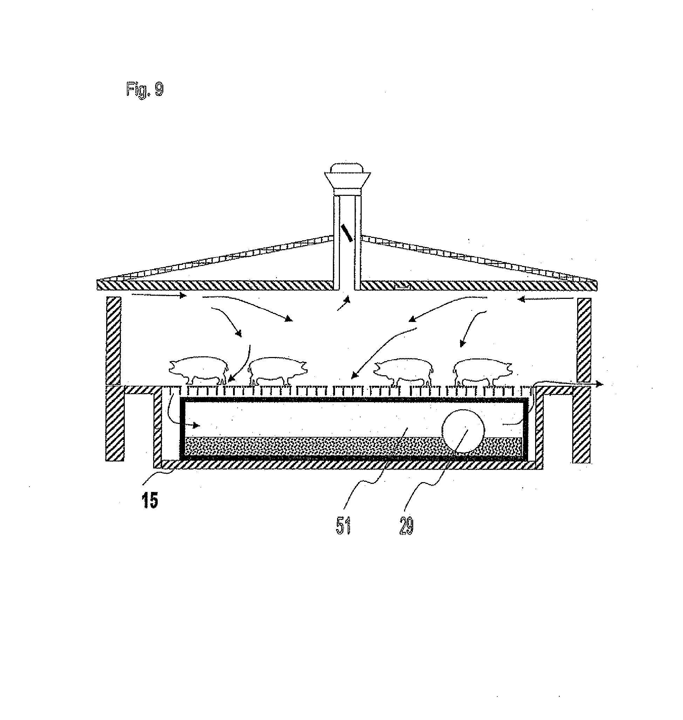

Die Fig. 9 zeigt eine Vorrichtung bei welcher eine Ammoniakfermentation unterhalb eines Raumes zur Haltung von Tieren durchgeführt wird. Der Raum zur Haltung von Tieren ist hier als Stall ausgebildet. Der Boden des Stalles ist gasdurchlässig ausgebildet. Unterhalb des Stalles befindet sich ein Behälter 51 zur Aufnahme der Biomasse 15, in welchem eine Ammoniakfermentation durchgeführt wird. Im Behälter 51 ist ein Tropfkörper 29 angeordnet, welcher als Träger für Mikroorganismen und/oder Enzyme dient. Selbstverständlich können mehrere dieser Tropfkörper 29 vorgesehen sein. In der Biomasse 15 sind Mikroorganismen und/oder Enzyme suspendiert. Somit kann zugleich eine submerse und emerse Ammoniakfermentation durchgeführt werden. Als Strippgas für die Ammoniakfermentation kann die Stallluft verwendet werden, wie in der Fig. 9 durch Pfeile angedeutet ist.

Der Behälter 51 kann in einer hier nicht gezeigten Ausführungsform auch neben dem Stall angeordnet sein. In einer besonders bevorzugten Ausführungsform ist der Behälter, in dem die Ammoniakfermentation stattfindet jedoch unterhalb des Stalles angeordnet. Dies ist mit folgenden Vorteilen verbunden. Die Entlüftung des Stalles erfolgt weitgehend über die Fermentationsanlage. Dadurch werden die Ammoniakemissionen aus dem Stall aufgefangen und die Ammoniakausbeute insgesamt erhöht. Die Tiere kommen nicht mit den Ammoniakemissionen in Kontakt. Die Aufstellung ist platzsparend. Ferner kann die Ammoniakfermentationsanlage eine Abluftreinigungsanlage ersetzten.

## Patentansprüche

1. Verfahren zur Behandlung stickstoffhaltiger Biomasse (3; 15), insbesondere Hühnerexkrement enthaltender Biomasse, bei dem
(a) die Biomasse (3; 15) bei einem Trockenmassegehalt von weniger als 70 %, vorzugsweise weniger als 50 %, einer Ammoniakfermentation unterzogen und
(b) Ammoniak während der Ammoniakfermentation mittels eines Strippgases und/oder durch Ausfällen, bevorzugt als Magnesiumammoniumphosphat, aus der Biomasse (3; 15) entfernt wird.

2. Verfahren nach Anspruch 1, bei dem die Konzentration von methanogenen Mikroorganismen der Biogasfermentation, falls vorhanden, während der Ammoniakfermentation und dem Entfernen von Ammoniak aus der Biomasse (3; 15) jeweils höchstens 10⁴ pro g Biomasse beträgt.

3. Verfahren nach wenigstens einem der vorhergehenden Ansprüche, bei dem Harnstoff oder Harnsäure abbauende Mikroorganismen in der Biomasse (3; 15) in einer Gesamtkonzentration von wenigstens 10⁶ pro g Biomasse enthalten sind.

4. Verfahren nach wenigstens einem der vorhergehenden Ansprüche, bei dem einer oder mehrere der folgenden Organismenteile und/oder Mikroorganismen in der Biomasse von Hause aus enthalten sind oder zugegeben werden:
Arthrobacter globiformis, Arthrobacter pascens, Aspergillus flavus, Bacillus acidi urici, Bacillus fastidiosus, Bacillus spp., Bacillus subtilis, Bacteroides spp., Brevibacterium spp.,
Campylobacter jejuni, Campylobacter spp., Candida spp., Candida utilis, Carthamus tinctorius Cicer arietinum, Cyberlindnera jadinii, Dictyostelium discoideum, Enterobacter spp.,
Faecalibacterium prausnitzii, Faecalibacterium spp., Geobacillus spp., Glycine max, Hansenula polymorpha, Helianthus spp., Microbacterium spp., Neurospora crassa, Peptostreptococcus Kluyver, Phaseolus coccineus, Phaseolus vulgaris, Pseudomonas aeruginosa, Puccinia recondita, Rhizopus oryzae, Ricinus communis, Saccharomyces cerevisiae, Streptomyces albidoflavus, Streptomyces aureofaciens, Streptomyces cyanogenus, Streptomyces graminofaciens, Trichoderma spp., Triticum aestivum, Uromyces phaseoli, Uromyces viciae-fabae, Vicia faba, Vigna unguiculata, Yucca brevifolia, Zea mays.

5. Verfahren nach wenigstens einem der vorhergehenden Ansprüche und wenigstens einem der folgenden Merkmale:
(iii) die Ammoniakfermentation dauert wenigstens 10 min, bevorzugter wenigstens 1 h;
(iv) die Ammoniakfermentation dauert höchstens 36 h, vorzugsweise höchstens 24 h.

6. Verfahren nach wenigstens einem der vorhergehenden Ansprüche und wenigstens einem der folgenden Merkmale:
(i) der Biomasse wird eine einer Ammoniakfermentation unterzogene Biomasse, in der die Konzentration von Ammoniak produzierenden Mikroorganismen wenigstens 10⁷ pro g Biomasse beträgt, vor oder während der Ammoniakfermentation beigemischt;
(ii) der Biomasse (3; 15) werden Enzyme, insbesondere Urikase, und/oder enzymbildende Mikroorganismen, insbesondere urikasebildende Mikroorganismen, zugesetzt.

7. Verfahren nach wenigstens einem der vorhergehenden Ansprüche und wenigstens einem der folgenden Merkmale:
(i) die Ammoniakkonzentration beträgt während der Ammoniakfermentation höchstens 70%, vorzugsweise höchstens 60%, der Gleichgewichtskonzentration, die dem Dissoziationsgleichgewicht des in der Biomasse enthaltenen gesamten ammoniakalischen Stickstoffs (GAS-N) entspricht;
(ii) bei dem Verfahren wird soviel Ammoniak entfernt, dass in der Biomasse (3; 15) nie mehr als 70 Gew.-%, vorzugsweise nie mehr als 60 Gew.-%, des durch die Ammoniakfermentation aus der Biomasse (3; 15) insgesamt erzeugbaren Ammoniaks vorhanden sind.

8. Verfahren nach wenigstens einem der vorhergehenden Ansprüche und wenigstens einem der folgenden Merkmale:
(i) die Ammoniakkonzentration beträgt über die überwiegende Zeitdauer der Ammoniakfermentation wenigstens 20%, vorzugsweise wenigstens 30%, der Gleichgewichtskonzentration, die dem Dissoziationsgleichgewicht des in der Biomasse enthaltenen gesamten ammoniakalischen Stickstoffs (GAS-N) entspricht;
(ii) bei dem Verfahren wird nur soviel Ammoniak entfernt, dass in der Biomasse (3; 15) stets wenigstens 20 Gew.-%, vorzugsweise stets wenigstens 30 Gew.-%, des durch die Ammoniakfermentation aus der Biomasse (3; 15) insgesamt erzeugbaren Ammoniaks vorhanden sind.

9. Verfahren nach wenigstens einem der vorhergehenden Ansprüche, bei dem die Ammoniakfermentation aerob oder semi-aerob durchgeführt wird.

10. Verfahren nach wenigstens einem der vorhergehenden Ansprüche, bei dem Ammoniak während der Ammoniakfermentation aus der Biomasse (3; 15) entfernt wird, bevor 10 bis 40 Gew.-%, bevorzugt 30 Gew.-% des in der Biomasse (3; 5) zu Beginn der Ammoniakfermentation enthaltenen Stickstoffs umgewandelt worden sind.

11. Verfahren nach wenigstens einem der vorhergehenden Ansprüche und wenigstens einem der folgenden Merkmale:
(iii) die Gesamtdauer der Ammoniakentfernung macht wenigstens 10%, vorzugsweise wenigstens 20%, der Dauer der Ammoniakfermentation aus;
(iv) nach Einsetzen der Amnmoniakentfernung wird kontinuierlich oder mit einer oder mehreren Unterbrechungen Ammoniak aus der Biomasse (3; 15) entfernt, wobei die jeweilige Unterbrechung höchstens 2 h, vorzugsweise höchstens 1 h, dauert.

12. Verfahren nach wenigstens einem der vorhergehenden Ansprüche, bei dem die Biomasse (3) während der Ammoniakfermentation befeuchtet und/oder das Strippgas mit einem Feuchteanteil von wenigstens 60 %, vorzugsweise wenigstens 70 %, zugeführt wird.

13. Verfahren nach wenigstens einem der vorhergehenden Ansprüche, bei dem der entfernte Ammoniak zur Herstellung eines stickstoffhaltigen Düngemittels oder eines wenigstens 40 Gew-% Ammoniak enthaltenden Fluids verwendet wird.

14. Verfahren nach wenigstens einem der vorhergehenden Ansprüche, bei dem Ammoniak im Strippgas abgereichert und das im Ammoniak abgereicherte Strippgas erneut in die Ammoniakfermentation zurückgeführt wird und zumindest einen Teil des Strippgases im Verfahrensschritt (b) bildet.

15. Verfahren nach wenigstens einem der vorhergehenden Ansprüche und wenigsten einem der folgenden Merkmale:
(i) die Ammoniakfermentation wird bei einem pH-Wert von wenigstens 7, vorzugsweise wenigstens 8, durchgeführt;
(ii) die Ammoniakfermentation wird bei einem pH-Wert von höchstens 9, vorzugsweise höchstens 8.5, durchgeführt.

16. Vorrichtung zur Behandlung stickstoffhaltiger Biomasse (3; 15), vorzugsweise zur Durchführung eines Verfahrens nach einem der vorhergehenden Ansprüche, mit zumindest einem Behälter (13; 23; 27; 51), welcher suspendierte und/oder auf einem Träger (22; 29) fixierte und/oder immobilisierte Mikroorganismen und/oder Enzyme zur Ammoniakfermentation enthält.

17. Vorrichtung zur Behandlung stickstoffhaltiger Biomasse (3; 15), vorzugsweise zur Durchführung eines Verfahrens nach einem der vorhergehenden Ansprüche, bei welcher eine Ammoniakfermentation unterhalb eines Raumes zur Haltung von Tieren und/oder neben einem Raum zur Haltung von Tieren durchführbar ist.
